# FASCICULE DE BREVET EUROPEEN

(11) **EP 3 629 541 B1**
(45) Date de publication et mention de la délivrance du brevet: **09.06.2021**
(21) Numéro de dépôt: 19198058.0
(22) Date de dépôt: 18.09.2019
(51) Int. Cl.: H04L 29/06, H04L 29/08

(54) **PROCÉDÉ DE GESTION D'ITINÉRANCE PAR TRANSFERT MULTI-RÉSEAUX**
ROAMING-VERWALTUNGSVERFAHREN DURCH MULTI-NETZWERK-TRANSFER
METHOD OF MANAGING ROAMING BY MULTI-NETWORK TRANSFER

(30) Priorité: 25.09.2018 FR 1871087
(43) Date de publication de la demande: 01.04.2020
(73) Titulaire: Sagemcom Energy & Telecom SAS, 92500 Rueil-Malmaison (FR)
(72) Inventeur: TEBOULLE, Henri, 92500 RUEIL MALMAISON (FR); LE GOURRIEREC, Marc, 92500 RUEIL MALMAISON (FR); HARNAY, Franck, 92500 RUEIL MALMAISON (FR); MOREAU, Guillaume, 92500 RUEIL MALMAISON (FR)
(74) Mandataire: Cabinet Le Guen Maillet

(56) Documents cités:
- US-A1- 2008 129 494
- US-A1- 2018 139 274
- NGUYEN THANH-LONG ET AL: "Horizontal Integration of CoAP and MQTT on Internet Protocol - based LoRaMotes", 2018 IEEE 29TH ANNUAL INTERNATIONAL SYMPOSIUM ON PERSONAL, INDOOR AND MOBILE RADIO COMMUNICATIONS (PIMRC), IEEE, 9 septembre 2018 (2018-09-09), pages 1-7, XP033479317, DOI: 10.1109/PIMRC.2018.8580674

## Description

### DOMAINE TECHNIQUE

La présente invention concerne un procédé de gestion d'itinérance par transfert multi-réseaux (« handover roaming » en anglais) dans le cadre d'un système de communication comportant un premier réseau et un second réseau reposant chacun sur une technologie de communication de type LPWAN (« Low-Power Wide-Area Network » en anglais) et dans lequel le premier réseau comporte des sous-réseaux implémentant des protocoles de transport distincts.

### ETAT DE LA TECHNIQUE ANTERIEURE

L'Internet des Objets (« Internet of Things » en anglais) émerge. L'Internet des Objets représente l'extension de l'Internet à des choses et à des lieux du monde physique. Alors que l'Internet ne se prolonge habituellement pas au-delà du monde électronique, l'Internet des Objets représente des échanges d'informations et de données provenant de dispositifs présents dans le monde réel vers l'Internet, comme par exemple pour effectuer une collecte de relevés de consommations électriques ou de consommations d'eau. L'Internet des Objets est considéré comme la troisième évolution de l'Internet, baptisée Web 3.0. L'Internet des Objets est en partie responsable de l'accroissement actuel du volume de données à transmettre et à stocker, et est ainsi à l'origine de ce qu'on appelle le « Big Data ». L'Internet des Objets revêt un caractère universel pour désigner une mise en communication d'objets aux usages variés, par exemple dans le domaine industriel, agro-alimentaire, de la e-santé ou de la domotique

Le document de l'art antérieur US2018139274 divulgue des procédés de calcul de périphérie intelligent basé sur une application dans un environnement de réseau étendu à faible puissance.

Pour permettre à des objets communicants, aussi appelés dispositifs terminaux, de communiquer dans le cadre de l'Internet des Objets, des systèmes de communications sont mis en place grâce à un ensemble de passerelles de collecte (« gathering gateways » en anglais) qui situées sur des points géographiquement hauts et qui sont déployées par un opérateur. Hors opérations de maintenance, ces passerelles de collecte sont typiquement fixes et permanentes, et communiquent avec les dispositifs terminaux par voie radio. On peut par exemple citer sur ce modèle les réseaux SigFox (marque déposée) ou ThingPark (marque déposée). Ces passerelles de collecte communiquent avec les dispositifs terminaux grâce à des communications radio moyenne ou longue portée selon une technologie de communication de type LPWAN, comme par exemple la technologie LoRaWAN (« Long Range Wide-Area Network » en anglais), aussi connue sous le diminutif « LoRa » (« Long Range » en anglais) du nom de l'alliance faisant la promotion de la technologie LoRaWAN. Ces passerelles de collecte servent ainsi de relais entre les dispositifs terminaux et un réseau cœur, typiquement constitué d'un ensemble de serveurs, du système de communication.

Les dispositifs terminaux sont souvent des dispositifs alimentés par batterie et sont donc voués à se mettre en veille autant que possible afin d'améliorer leur autonomie énergétique. Dans ce but, ces dispositifs terminaux appliquent, dans leurs communications indirectes avec le réseau cœur (via une ou plusieurs passerelles de collecte), un mécanisme de communication dit en « Classe A » dans le protocole LoRaWAN. Ce mécanisme consiste à définir, de manière déterministe pour un dispositif terminal considéré et la passerelle de collecte qui agit comme relais pour le réseau cœur, une ou plusieurs fenêtres de réception pendant lesquelles le dispositif terminal considéré écoute le medium de communication où les communications descendantes doivent être effectuées. Une ou plusieurs fenêtres de réception débutent à la fin d'une période de durée prédéfinie d'après un instant de transmission de trame ascendante par le dispositif terminal en question et ont, elles aussi, une durée prédéfinie. Deux fenêtres de réception sont ainsi définies dans le cas du protocole LoRaWAN défini dans la version 1.1 des spécifications du 11 octobre 2017. Une trame descendante qui doit être adressée audit dispositif terminal est alors effectuée dans l'une ou l'autre (le cas échéant) desdites fenêtres de réception, notamment pour effectuer un acquittement de ladite trame ascendante. Il est en effet typiquement nécessaire que le dispositif terminal en question sache que le réseau cœur a effectivement reçu la trame ascendante transmise par ledit dispositif terminal. Cette approche par fenêtres de réception débutant à des instants déterministes pour le dispositif terminal en question et la passerelle de collecte qui agit comme relais pour le serveur permet audit dispositif terminal de se mettre en veille entretemps et de préserver ainsi son autonomie énergétique. A noter qu'il existe une évolution de ce mécanisme de fenêtre de réception, dit en « Classe B » dans le protocole LoRaWAN, qui définit des fenêtres de réception notifiées dans des balises transmises par les passerelles de collecte. Et pour les dispositifs terminaux qui disposent de plus d'autonomie énergétique, un troisième mécanisme est disponible, dit en « Classe C » dans le protocole LoRaWAN, dans lequel les dispositifs terminaux sont supposés écouter en permanence le medium de communication.

A noter que l'on parle de trame ou communication ascendante lorsqu'une trame ou une communication remonte depuis un dispositif terminal vers le réseau cœur, et que l'on parle de trame ou communication descendante dans la direction opposée.

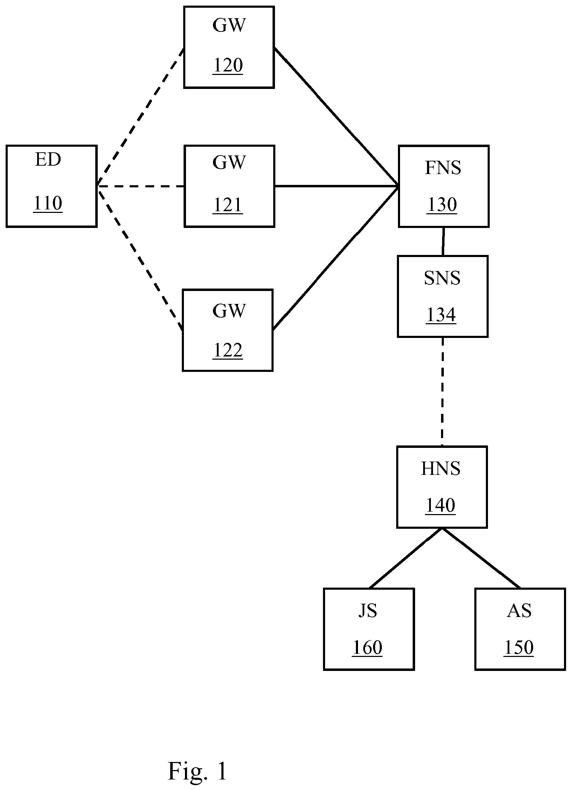

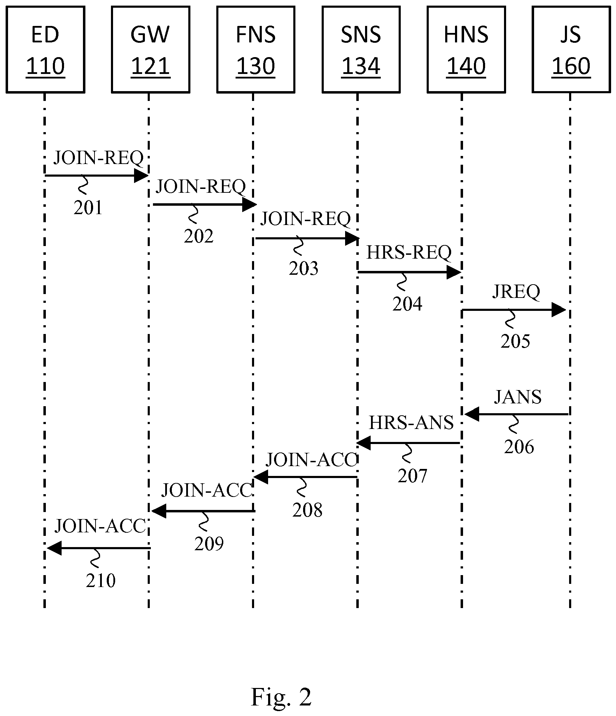

Cependant, il n'est pas certain que le temps d'aller-retour entre les passerelles de collecte et le réseau cœur permette systématiquement de respecter des échéances de réception attendues, plus particulièrement pour les dispositifs terminaux de « Classe A » où les opportunités de communications descendantes sont peu nombreuses. C'est notamment le cas au moment où le dispositif terminal rejoint (« join » en anglais) le système de communication, tout particulièrement dans des situations d'itinérance par transfert multi-réseaux. Cette situation est illustrée par l'échange de messages schématisé sur la Fig. 2 sur la base d'une architecture système schématisée sur la Fig. 1 dans laquelle deux réseaux de deux opérateurs interagissent pour former le système de communication. Elle est à distinguer des situations d'itinérance passive (« passive roaming » en anglais) où la couche MAC (« Medium Access Control » en anglais) est gérée à distance par le réseau cœur de l'opérateur auprès duquel une souscription de service a été effectuée. Un principal avantage de l'itinérance par transfert multi-réseaux est que le plan de contrôle de la couche MAC est géré par le réseau cœur d'accueil, ce qui permet une meilleure adéquation des paramétrages (fréquences porteuses, facteur d'étalement...) des dispositifs terminaux vis-à-vis des conditions effectives de communication avec le réseau cœur d'accueil qui assure le relais avec le réseau cœur de l'opérateur auprès duquel la souscription de service a été effectuée. Par rapport à l'itinérance passive, cela permet d'améliorer la capacité à assurer la continuité des services dans de très bonnes conditions.

La **Fig. 1** illustre ainsi schématiquement un système de communication de l'Internet des Objets adapté à l'itinérance par transfert multi-réseaux. Le système de communication comporte un premier réseau de type LPWAN d'un premier opérateur interconnecté à un second réseau de type LPWAN d'un second opérateur. Le premier réseau comporte au moins une passerelle de collecte 120, 121, 122 (notées GW, pour « GateWay » en anglais, sur les Figs.). Les passerelles de collecte 120, 121, 122 disposent de liens de communication respectifs avec un réseau cœur du premier réseau du premier opérateur. Trois passerelles de collecte du premier réseau sont représentées sur la Fig. 1, mais le système de communication peut comporter une quantité différente de passerelles de collecte. Le second réseau comporte lui aussi de telles passerelles de collecte, qui ne sont cependant pas représentées par souci de simplification.

Dans le système de communication, des messages doivent être remontés sous forme de trames depuis un ensemble de dispositifs terminaux (notés ED, pour « End Device » en anglais, sur les Figs.) jusqu'au réseau cœur. Bien que le système de communication comporte deux réseaux, et donc deux réseaux cœurs, ces derniers sont perçus comme un unique réseau cœur par les dispositifs terminaux. En d'autres termes, l'itinérance par transfert multi-réseaux est transparente pour les dispositifs terminaux. Un seul dispositif terminal 110 est représenté sur la Fig. 1 par souci de simplification, mais le système de communication comporte typiquement une grande quantité de dispositifs terminaux.

Tout réseau cœur a un rôle de contrôle et de collecte d'informations disponibles auprès des dispositifs terminaux, et les passerelles de collecte 120, 121, 122 ont un rôle de relais entre les dispositifs terminaux et le réseau cœur. Pour permettre de remplir ce rôle de relais, chaque passerelle de collecte 120, 121, 122 dispose d'au moins une interface radio permettant à ladite passerelle de collecte de communiquer avec au moins un dispositif terminal en s'appuyant sur un medium de communication sans-fil, et préférentiellement selon une technologie de communication de type LPWAN. Ladite interface radio est par exemple de type LoRa permettant ainsi d'implémenter, au sein du système de communication, un protocole de transmission de données de type LoRaWAN. Ladite interface radio est telle qu'un dispositif terminal peut être à portée radio d'une pluralité de passerelles de collecte, selon la position géographique dudit dispositif terminal par rapport aux passerelles de collecte 120, 121, 122 et des conditions radio dans l'environnement dudit dispositif terminal et des passerelles de collecte 120, 121, 122. C'est le cas par exemple du dispositif terminal 110 sur la Fig. 1, qui est à portée radio des passerelles de collecte 120, 121 et 122. De plus, chaque passerelle de collecte 120, 121, 122 dispose d'au moins une autre interface permettant à ladite passerelle de collecte de communiquer avec le réseau cœur. Par exemple, cette autre interface est une interface filaire permettant de communiquer avec le réseau cœur via l'Internet ou une interface radio de type GPRS (« General Packet Radio Service » en anglais).

Le réseau cœur du premier opérateur est adapté pour effectuer de l'itinérance par transfert multi-réseaux en collaboration avec le réseau cœur du second réseau. Ainsi, le réseau cœur du premier opérateur comporte un premier serveur FNS (« Forward Network Server » en anglais) 130 en charge de gérer les passerelles de collecte 120, 121, 122 pour le compte dudit réseau cœur et d'assurer notamment la déduplication des trames ascendantes reçues de dispositifs terminaux via lesdites passerelles de collecte 120, 121, 122. Le réseau cœur du premier opérateur comporte en outre un second serveur SNS (« Serving Network Server » en anglais) 134 couplé au premier serveur FNS 130. Le second serveur SNS 134 est en charge de contrôler la couche MAC pour les dispositifs terminaux communiquant via les passerelles de collecte 120, 121, 122 qui sont gérées par le premier serveur FNS 130. Le premier serveur FNS 130 et le second serveur SNS 134 peuvent être implémentés dans une même entité matérielle.

Le réseau cœur du second opérateur comporte un troisième serveur HNS (« Home Network Server » en anglais) 140, qui est le serveur qui coordonne le réseau cœur du second opérateur. Ce troisième serveur HNS 140 est l'équivalent dans le second réseau du second serveur SNS 134 dans le premier réseau. D'ailleurs, le second réseau comporte typiquement aussi un serveur équivalent au serveur FNS 130, couplé au troisième serveur HNS 140, et qui gère les passerelles de collecte du second réseau.

Le réseau cœur du second opérateur comporte en outre un quatrième serveur AS 150, qui implémente une application avec laquelle le dispositif terminal 110 communique, i.e., échange des données applicatives, dans le cadre de la souscription de service. Le réseau cœur du second opérateur peut comporter une pluralité de tels quatrièmes serveurs AS 150. Enfin, le réseau cœur du second opérateur comporte en outre un cinquième serveur JS 160, en charge de la gestion des souscriptions des dispositifs terminaux afin de faire les vérifications de souscription nécessaires pour leur permettre de bénéficier des services du quatrième serveur AS 150 lorsque lesdits dispositifs terminaux cherchent à rejoindre le système de communication.

Le quatrième serveur AS 150 et le cinquième serveur JS 160 sont déclarés auprès du troisième serveur HNS 140, et sont ainsi connectés au troisième serveur HNS 140. Le second serveur SNS 134 communique avec le troisième serveur HNS 140 qui sert de relais avec le quatrième serveur AS 150 et le cinquième serveur JS 160 dans le cadre des communications avec le dispositif terminal 110. En d'autres termes, le troisième serveur HNS 140 est en charge d'interfacer le quatrième serveur AS 150 et le cinquième serveur JS 160 avec le premier réseau et plus particulièrement avec le second serveur SNS 134.

Il existe toutefois des situations où le second serveur SNS 134 du premier opérateur communique directement avec le cinquième serveur JS 160 du second opérateur, particulièrement lorsque le second serveur SNS 134 ne connaît pas encore l'identité du troisième serveur HNS 140 au moment où le dispositif terminal 110 rejoint en itinérance le réseau par le biais du premier serveur FNS 130. Dans ce cas, le second serveur SNS 134 utilise un identifiant, appelé JoinEUI dans les spécifications LoRaWAN 1.1, qui identifie de manière unique le cinquième serveur JS 160 et que le dispositif terminal 110 inclut dans un message que ledit dispositif terminal 110 transmet pour rejoindre le réseau. Le second serveur SNS 134 contacte alors un sixième serveur DNS (« Domain Name Server » en anglais) en charge d'effectuer des résolutions de noms de domaine. Ce sixième serveur DNS (non représenté) fournit alors au second serveur SNS 134 une adresse pour contacter le cinquième serveur JS 160 d'après l'identifiant unique en question. Le second serveur SNS 134 fournit alors au cinquième serveur JS 160 un autre identifiant, appelé DevEUI dans les spécifications LoRaWAN 1.1, qui identifie de manière unique le dispositif terminal 110 afin que le cinquième serveur JS 160 fournisse en conséquence l'identité du troisième serveur HNS 140 en retour, car un même serveur JS 160 peut interagir avec au moins un autre serveur équivalent au troisième serveur HNS 140.

A noter que d'autres liens de communication (non illustrés, par souci de simplification) entre les serveurs peuvent exister au sein de chacun des premier et second réseaux, notamment entre le quatrième serveur AS 150 et le cinquième serveur JS 150.

Lorsque le dispositif terminal 110 rejoint en itinérance par transfert multi-réseaux le système de communication, des échanges de messages sont effectués, comme illustré schématiquement sur la **Fig. 2****.**

Dans une étape 201, le dispositif terminal 110 transmet un message JOIN-REQ via son interface radio. Ce message est appelé Join-request dans les spécifications LoRaWAN 1.1. Comme indiqué précédemment, ce message JOIN-REQ inclut un identifiant unique du dispositif terminal 110 et un identifiant unique du cinquième serveur JS 160. Ce message JOIN-REQ est capté par au moins une passerelle de collecte 120, 121, 122. Considérons que ce message JOIN-REQ a été capté par la passerelle de collecte 121. Cette dernière relaie alors, dans une étape 202, le message JOIN-REQ au premier serveur FNS 130 auquel ladite passerelle de collecte 121 est rattachée. Le premier serveur FNS 130 relaie alors le message JOIN-REQ au second serveur SNS 134 dans une étape 203. Le second serveur SNS 134 détecte que le message JOIN-REQ concerne un dispositif terminal en itinérance. Le second serveur SNS 134 relaie alors le message JOIN-REQ au troisième serveur HNS 140, sous la forme d'un message HRS-REQ, dans une étape 204. Ce message est appelé HRStartReq dans les spécifications LoRaWAN Backend Interfaces 1.0, qui traitent de l'itinérance dans le contexte des spécifications LoRaWAN 1.1. Ce message HRS-REQ contient typiquement des informations complémentaires de gestion de couche MAC par le second serveur SNS 134. Ensuite, dans une étape 205, le troisième serveur HNS 140 relaie le message JOIN-REQ, sous la forme d'un message JREQ, au cinquième serveur JS 160. Ce message est appelé JoinReq dans les spécifications LoRaWAN 1.1. Ce message JREQ contient typiquement une partie des informations complémentaires de gestion de couche MAC contenues dans le message HRS-REQ. Le cinquième serveur JS 160 effectue alors l'authentification du dispositif terminal 110 et en cas d'authentification réussie, génère les clefs de sécurité nécessaires au dispositif terminal 110 pour communiquer dans le système de communication et bénéficier des services du quatrième serveur AS 150.

Puis, un retour est fourni au dispositif terminal 110 en itinérance. Pour ce faire, le cinquième serveur JS 160 transmet au troisième serveur HNS 140, dans une étape 206, un message JANS en réponse au message JREQ. Ce message est appelé JoinAns dans les spécifications LoRaWAN 1.1. Le message JANS inclut un message JOIN-ACC à relayer au dispositif terminal 110, et dans le cas où le dispositif terminal 110 est effectivement authentifié par le cinquième serveur JS 160, les clefs de sécurité permettant d'assurer des échanges sécurisés avec le dispositif terminal 110, y compris, sous forme chiffrée par une clef connue du dispositif terminal 110, la clef de sécurité à utiliser pour communiquer avec le quatrième serveur AS 150. Le message JOIN-ACC est appelé Join-accept dans les spécifications LoRaWAN 1.1. Le message JANS répète les clefs de sécurité permettant au dispositif terminal 110 de communiquer dans le système de communication, de manière que les communications du dispositif terminal 110 puissent être gérées par le réseau cœur du premier opérateur (à l'exception donc de la clef de sécurité permettant au dispositif terminal 110 de communiquer avec le quatrième serveur AS 150). Dans une étape 207, le troisième serveur HNS 140 transmet au second serveur SNS 134 un message HRS-ANS en réponse au message HRS-REQ, qui inclut le contenu du message JANS ainsi que des informations de profil de service relatif au dispositif terminal 110 en itinérance. Ce message est appelé HRStartAns dans les spécifications LoRaWAN Backend Interfaces 1.0. Dans une étape 208, le second serveur SNS 134 relaie au premier serveur FNS 130 le message JOIN-ACC créé par le cinquième serveur JS 160. Puis, dans une étape 209, le premier serveur FNS 130 sélectionne la passerelle de collecte en charge de relayer le message JOIN-ACC au dispositif terminal 110 et lui fait suivre ledit message JOIN-ACC. Considérons que le premier serveur FNS 130 sélectionne pour ce faire la passerelle de collecte 121. Alors, dans une étape 210, la passerelle de collecte 121 relaie par voie radio ledit message JOIN-ACC à l'attention du dispositif terminal 110.

De ce qui précède, il apparaît que la gestion d'itinérance par transfert multi-réseaux implique de nombreux relais de messages, notamment entre les différents serveurs impliqués. Ces relais impliquent des latences d'exécution qui viennent s'ajouter à des latences de traitement significatives de la part des serveurs, notamment en ce qui concerne le cinquième serveur JS 160. Ces relais de messages sont alors parfois difficilement compatibles avec des échéances de latence à respecter, particulièrement dans le cas des fenêtres de réception susmentionnées, ce qui entraîne que les dispositifs terminaux peuvent avoir à faire face à de grandes difficultés pour rejoindre le réseau, du fait qu'ils ne reçoivent pas de réponse du réseau cœur dans le temps imparti.

Il est souhaitable de pallier ces inconvénients de l'état de la technique. Il est notamment souhaitable d'augmenter les chances pour les dispositifs terminaux de rejoindre avec succès le réseau en cas d'itinérance par transfert multi-réseaux plus particulièrement dans le cas où des sous-réseaux implémentant des protocoles de transport distincts sont utilisés pour interconnecter les dispositifs terminaux avec le réseau cœur. En effet, l'utilisation de sous-réseaux implémentant des protocoles de transport distincts entraîne des différences de latence de propagation qui amplifient les difficultés susmentionnées. Il est aussi souhaitable d'augmenter les chances pour les dispositifs terminaux que les communications s'effectuent dans des temps impartis dans le cadre de l'utilisation de ces sous-réseaux implémentant des protocoles de transport distincts. Il est aussi souhaitable de pouvoir s'appuyer sur des formats de message existants dans les spécifications LoRaWAN 1.1.

### EXPOSE DE L'INVENTION

A cet effet, il est proposé un procédé de gestion d'itinérance par transfert multi-réseaux dans un système de communication comportant un premier réseau de type LPWAN d'un premier opérateur et un second réseau de type LPWAN d'un second opérateur. Le premier réseau comporte : des sous-réseaux comportant chacun au moins un nœud de convergence et des nœuds de communication intégrant des passerelles de collecte, les sous-réseaux implémentant des protocoles de transport respectifs distincts ; un premier serveur, pour chaque sous-réseau, en charge de gérer lesdites passerelles de collecte incluses dans ledit sous-réseau, chaque passerelle de collecte communiquant via un unique nœud de convergence associé avec un unique premier serveur associé ; et un second serveur, couplé à tout premier serveur, en charge de contrôler la couche MAC pour des dispositifs terminaux communiquant via lesdites passerelles de collecte du premier réseau. Le second réseau comporte : un troisième serveur en charge d'interfacer un quatrième serveur et un cinquième serveur avec le second serveur du premier réseau ; le quatrième serveur, qui implémente une application avec laquelle au moins un dispositif terminal du second opérateur échange des données applicatives dans le cadre d'une souscription de services définie auprès du second opérateur ; et le cinquième serveur, en charge d'authentifier tout dispositif terminal cherchant à rejoindre le système de communication pour bénéficier des services du quatrième serveur. Le procédé est tel que le système de communication transporte des trames ascendantes incluant des données applicatives depuis ledit au moins un dispositif terminal du second opérateur jusqu'au quatrième serveur par relais successifs d'un dit premier serveur, du second serveur et du troisième serveur lorsque ledit au moins un dispositif terminal du second opérateur est authentifié et en outre que lesdites trames ascendantes sont captées par au moins une passerelle de collecte du premier réseau. Le procédé est en outre tel que chaque passerelle de collecte d'au moins un sous-réseau du premier réseau, qui a détecté un dispositif terminal du second opérateur demandant à rejoindre le système de communication pour bénéficier des services du quatrième serveur, communique avec le cinquième serveur pour authentifier ledit dispositif terminal du second opérateur détecté, en court-circuitant le premier serveur associé à ladite passerelle de collecte, le second serveur et le troisième serveur grâce à une interface de communication court-circuitant aussi le nœud de convergence associé à ladite passerelle de collecte. Ainsi, les chances pour les dispositifs terminaux du second opérateur de rejoindre avec succès le système de communication malgré la présence de divers sous-réseaux implémentant des protocoles de transport distincts et entraînant donc des latences de propagation diverses en cas d'itinérance par transfert multi-réseaux sont augmentées par réduction significative de latence en court-circuitant les premier, second et troisième serveurs ainsi que le nœud de convergence associé à la passerelle de collecte concernée.

Selon un mode de réalisation particulier, le premier réseau disposant d'une plage d'adresses pour tous les dispositifs terminaux accédant au système de communication via les passerelles de collecte du premier réseau, le cinquième serveur gère un sous-ensemble prédéterminé d'adresses de la plage d'adresses du premier réseau et attribue une adresse parmi ledit sous-ensemble prédéterminé d'adresses à tout dispositif terminal du second opérateur qui est en itinérance par transfert multi-réseaux via le premier réseau et qui est authentifié par le cinquième serveur. Ainsi, l'adressage des dispositifs terminaux dans le premier réseau reste cohérent bien que les premier, second et troisième serveurs soient court-circuités pour authentifier les dispositifs terminaux du second opérateur.

Selon un mode de réalisation particulier, les communications avec chaque dispositif terminal authentifié du second opérateur étant chiffrées, le cinquième serveur fournit les clefs de sécurité nécessaires auxdites communications chiffrées, et lorsqu'une passerelle de collecte du premier réseau reçoit un message du cinquième serveur indiquant qu'un dispositif terminal du second opérateur a été authentifié avec succès et incluant lesdites clefs de sécurité, ladite passerelle de collecte du premier réseau relaie les clefs de sécurité au premier serveur associé à ladite passerelle de collecte. Ainsi, les chiffrements et déchiffrements de communications peuvent être confiés à une autre entité que la passerelle de collecte du premier réseau à laquelle le cinquième serveur a répondu.

Selon un mode de réalisation particulier, le premier serveur relaie les clefs de sécurité au second serveur. Ainsi, les chiffrements et déchiffrements de communications peuvent être mis en place au niveau du second serveur bien que les premier, second et troisième serveurs soient court-circuités pour authentifier ledit dispositif terminal du second opérateur. De plus, le second serveur peut confier les chiffrements et déchiffrements de communications à une autre entité d'un autre sous-réseau du premier réseau par le biais d'un autre premier serveur.

Selon un mode de réalisation particulier, pour demander à rejoindre le système de communication pour bénéficier des services du quatrième serveur, chaque dispositif terminal du second opérateur envoie un message incluant un identifiant qui identifie de manière unique le cinquième serveur, et chaque passerelle de collecte du premier réseau captant ledit message détermine à quelle adresse contacter le cinquième serveur grâce à une association préalablement stockée en mémoire entre ledit identifiant et l'adresse pour contacter le cinquième serveur. Ainsi, chaque passerelle de collecte du premier réseau peut déterminer de manière simple que le cinquième serveur doit être directement contacté et comment contacter le cinquième serveur.

Selon un mode de réalisation particulier, sur configuration de chaque passerelle de collecte du premier réseau avec l'identifiant qui identifie de manière unique le cinquième serveur, ladite passerelle de collecte du premier réseau demande à un sixième serveur, en charge d'effectuer des résolutions de noms de domaine, de fournir l'adresse pour contacter le cinquième serveur grâce audit identifiant qui identifie de manière unique le cinquième serveur. Ainsi, chaque passerelle de collecte du premier réseau a anticipé le besoin de contacter le cinquième serveur pour gérer les dispositifs terminaux du second opérateur en itinérance par transfert multi-réseaux, ce qui réduit d'autant la latence de traitement au moment où un dispositif terminal du second opérateur souhaite rejoindre le système de communication par itinérance par transfert multi-réseaux.

Selon un mode de réalisation particulier, sur configuration de chaque premier serveur avec l'identifiant qui identifie de manière unique le cinquième serveur, chaque premier serveur demande à un sixième serveur, en charge d'effectuer des résolutions de noms de domaine, de fournir l'adresse pour contacter le cinquième serveur grâce audit identifiant qui identifie de manière unique le cinquième serveur, et chaque premier serveur propage une association dudit identifiant et de ladite adresse à chaque passerelle de collecte qui est associée audit premier serveur. Ainsi, la procédure pour initialiser les passerelles de collecte du premier réseau dans le cadre de l'itinérance par transfert multi-réseaux est simple et efficace.

Selon un mode de réalisation particulier, lorsque le cinquième serveur reçoit plusieurs copies d'un même message qui émane d'un dispositif terminal du second opérateur et qui demande à rejoindre le système de communication, le cinquième serveur effectue une déduplication de données et répond à la première copie en séquence dudit message. Ainsi, la gestion des remontées parallèles des copies de messages par différentes passerelles de collecte du premier réseau est simple bien que les premier, second et troisième serveurs soient court-circuités pour authentifier ledit dispositif terminal du second opérateur.

Selon un mode de réalisation particulier, lorsqu'une passerelle de collecte du premier réseau reçoit un message du cinquième serveur indiquant qu'un dispositif terminal du second opérateur a été authentifié avec succès, ladite passerelle de collecte active une délégation et notifie en conséquence le premier serveur auquel ladite passerelle de collecte est associée, la délégation comportant les étapes suivantes : affecter un tampon audit dispositif terminal du second opérateur et y stocker des données utiles ultérieurement reçues de manière asynchrone via ledit premier serveur à l'attention dudit dispositif terminal du second opérateur ; acquitter toute trame ascendante ultérieurement reçue depuis ledit dispositif terminal du second opérateur en construisant et en transmettant, pour le compte du second serveur, des trames descendantes incluant des acquittements respectifs desdites trames ascendantes et incluant, le cas échéant, des données utiles stockées dans le tampon affecté audit dispositif terminal du second opérateur ; et relayer la trame ascendante vers ledit premier serveur. De plus, sur réception d'une trame descendante à l'attention dudit dispositif terminal du second opérateur, ladite passerelle de collecte place les données utiles, fournies dans la trame descendante, dans le tampon affecté audit dispositif terminal du second opérateur. Ainsi, les chances pour les dispositifs terminaux du second opérateur que leurs communications dans le système de communication s'effectuent dans des temps impartis sont augmentées.

Selon un mode de réalisation particulier, chaque passerelle de collecte du premier réseau qui reçoit, en provenance du premier serveur associé à ladite passerelle de collecte, un ordre de désactivation de la délégation vis-à-vis d'un dispositif terminal du second opérateur effectue les étapes suivantes : si le tampon affecté au dispositif terminal du second opérateur est vide, confirmer auprès dudit premier serveur que ladite passerelle de collecte a désactivé la délégation vis-à-vis dudit dispositif terminal du second opérateur ; et si le tampon affecté audit dispositif terminal du second opérateur n'est pas vide, maintenir la délégation jusqu'à ce que ledit tampon soit vidé par construction et transmission de dites trames descendantes par ladite passerelle de collecte. Ainsi, la désactivation de la délégation s'effectue de manière simple et cohérente.

Selon un mode de réalisation particulier, chaque passerelle de collecte du premier réseau ayant activé la délégation vis-à-vis d'un dispositif terminal du second opérateur incrémente une valeur d'un compteur de trames descendantes au fil des constructions desdites trames descendantes à l'attention dudit dispositif terminal du second opérateur et inclut dans lesdites trames descendantes la valeur incrémentée du compteur de trames descendantes, et lorsque ladite passerelle de collecte désactive la délégation, ladite passerelle de collecte notifie au premier serveur une valeur à jour du compteur de trames descendantes. Ainsi, le comptage des trames descendantes s'effectue de manière transparente pour le dispositif terminal du second opérateur en question.

Un autre objet de l'invention est un système de communication comportant un premier réseau de type LPWAN d'un premier opérateur et un second réseau de type LPWAN d'un second opérateur. Le premier réseau comporte : des sous-réseaux comportant chacun au moins un nœud de convergence et des nœuds de communication intégrant des passerelles de collecte, les sous-réseaux implémentant des protocoles de transport respectifs distincts ; un premier serveur, pour chaque sous-réseau, en charge de gérer lesdites passerelles de collecte incluses dans ledit sous-réseau, chaque passerelle de collecte communiquant via un unique nœud de convergence associé avec un unique premier serveur associé ; et un second serveur, couplé à tout premier serveur, en charge de contrôler la couche MAC pour des dispositifs terminaux communiquant via lesdites passerelles de collecte du premier réseau. Le second réseau comportant : un troisième serveur en charge d'interfacer un quatrième serveur et un cinquième serveur avec le second serveur du premier réseau ; le quatrième serveur, qui implémente une application avec laquelle au moins un dispositif terminal du second opérateur échange des données applicatives dans le cadre d'une souscription de services définie auprès du second opérateur ; et le cinquième serveur, en charge d'authentifier tout dispositif terminal cherchant à rejoindre le système de communication pour bénéficier des services du quatrième serveur. Le système de communication étant agencé, dans le cadre d'une gestion d'itinérance par transfert multi-réseaux entre le premier réseau et le second réseau, pour transporter des trames ascendantes incluant des données applicatives depuis ledit au moins un dispositif terminal du second opérateur jusqu'au quatrième serveur par relais successifs d'un dit premier serveur, du second serveur et du troisième serveur lorsque ledit au moins un dispositif terminal du second opérateur est authentifié et en outre que lesdites trames ascendantes sont captées par au moins une passerelle de collecte du premier réseau. Le système de communication étant en outre tel que chaque passerelle de collecte d'au moins un sous-réseau du premier réseau, qui a détecté un dispositif terminal du second opérateur demandant à rejoindre le système de communication pour bénéficier des services du quatrième serveur, communique avec le cinquième serveur pour authentifier ledit dispositif terminal du second opérateur détecté, en court-circuitant le premier serveur associé à ladite passerelle de collecte, le second serveur et le troisième serveur grâce à une interface de communication court-circuitant aussi le nœud de convergence associé à ladite passerelle de collecte.

Selon un mode de réalisation particulier du procédé et/ou du système de communication susmentionnés, un sous-réseau du premier réseau est un réseau de communication par courants porteurs où lesdits nœuds de communication sont des compteurs électriques intelligents et où chaque dispositif de convergence est un concentrateur de données, et un autre sous-réseau du premier réseau est un réseau de fourniture d'accès à l'Internet où lesdits nœuds de communication sont des passerelles résidentielles et où chaque dispositif de convergence est un multiplexeur de type DSLAM (« Digital Subscriber Line Access Multiplexer » en anglais).

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un système de communication de l'Internet des Objets selon l'état de la technique ;
[Fig. 2] illustre schématiquement des échanges de messages survenant dans le système de communication de l'Internet des Objets de la Fig. 1 ;
[Fig. 3A] illustre schématiquement un système de communication de l'Internet des Objets dans lequel la présente invention peut être implémentée ;
[Fig. 3B] illustre schématiquement un sous-réseau du système de communication de l'Internet des Objets de la Fig. 3A ;
[Fig. 3C] illustre schématiquement un autre sous-réseau du système de communication de l'Internet des Objets de la Fig. 3A ;
[Fig. 4] illustre schématiquement un nœud de communication d'un sous-réseau du système de communication de l'Internet des Objets de la Fig. 3A ;
[Fig. 5] illustre schématiquement une architecture matérielle de dispositif de communication dans le système de communication de l'Internet des Objets de la Fig. 3A ;
[Fig. 6] illustre schématiquement des échanges de messages survenant dans le système de communication de l'Internet des Objets de la Fig. 3A ;
[Fig. 7A] illustre schématiquement une première encapsulation de messages utilisée dans le système de communication de l'Internet des Objets de la Fig. 3A ;
[Fig. 7B] illustre schématiquement une seconde encapsulation de messages utilisée dans le système de communication de l'Internet des Objets de la Fig. 3A ;
[Fig. 7C] illustre schématiquement une troisième encapsulation de messages utilisée dans le système de communication de l'Internet des Objets de la Fig. 3A ;
[Fig. 7D] illustre schématiquement une quatrième encapsulation de messages utilisée dans le système de communication de l'Internet des Objets de la Fig. 3A ;
[Fig. 8A] illustre schématiquement une cinquième encapsulation de messages utilisée dans le système de communication de l'Internet des Objets de la Fig. 3A ;
[Fig. 8B] illustre schématiquement une sixième encapsulation de messages utilisée dans le système de communication de l'Internet des Objets de la Fig. 3A ;
[Fig. 8C] illustre schématiquement une septième encapsulation de messages utilisée dans le système de communication de l'Internet des Objets de la Fig. 3A ;
[Fig. 8D] illustre schématiquement une huitième encapsulation de messages utilisée dans le système de communication de l'Internet des Objets de la Fig. 3A ;
[Fig. 9A] illustre schématiquement une neuvième encapsulation de messages utilisée dans le système de communication de l'Internet des Objets de la Fig. 3A ;
[Fig. 9B] illustre schématiquement une dixième encapsulation de messages utilisée dans le système de communication de l'Internet des Objets de la Fig. 3A ;
[Fig. 9C] illustre schématiquement une onzième encapsulation de messages utilisée dans le système de communication de l'Internet des Objets de la Fig. 3A ;
[Fig. 9D] illustre schématiquement une douzième encapsulation de messages utilisée dans le système de communication de l'Internet des Objets de la Fig. 3A ;
[Fig. 10A] illustre schématiquement une treizième encapsulation de messages utilisée dans le système de communication de l'Internet des Objets de la Fig. 3A ;
[Fig. 10B] illustre schématiquement une quatorzième encapsulation de messages utilisée dans le système de communication de l'Internet des Objets de la Fig. 3A ;
[Fig. 11] illustre schématiquement un algorithme d'activation de délégation ;
[Fig. 12] illustre schématiquement un algorithme de traitement de trame ascendante ; et
[Fig. 13] illustre schématiquement un algorithme de traitement de trame descendante.

### EXPOSE DETAILLE DE MODES DE REALISATION

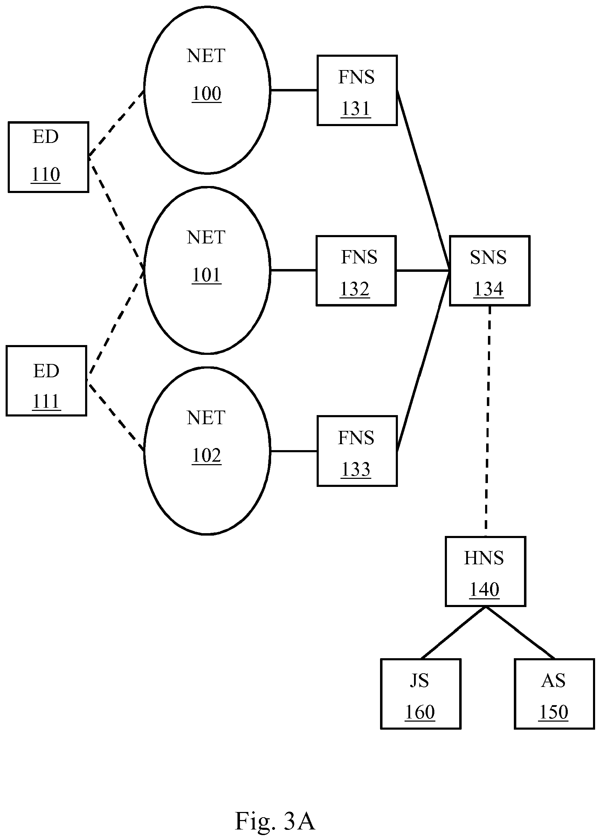

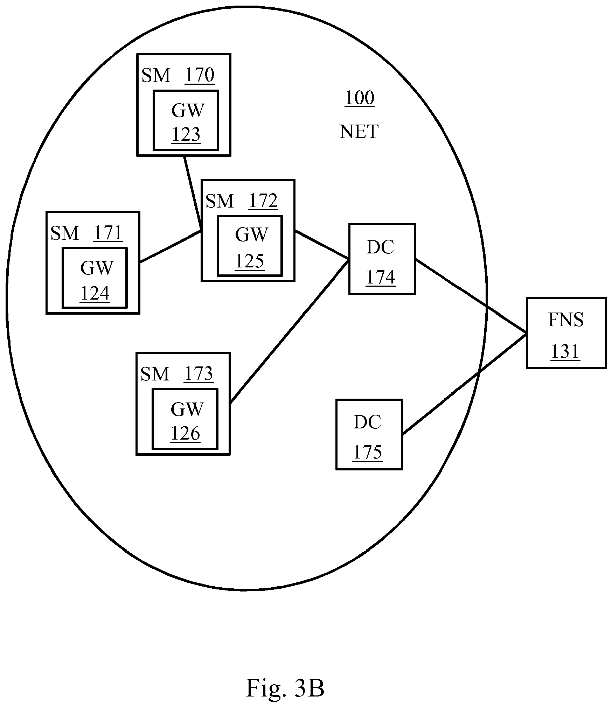

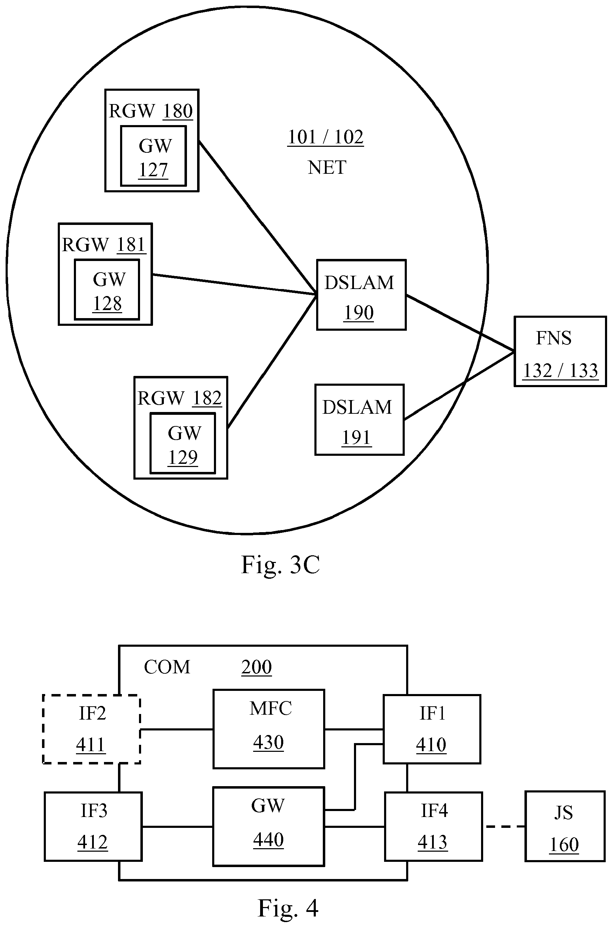

La **Fig. 3A** illustre schématiquement un système de communication de l'Internet des Objets dans lequel la présente invention peut être implémentée. Le système de communication de l'Internet des Objets de la Fig. 3A reprend en partie le système de communication de l'Internet des Objets de la Fig. 1. Le premier réseau comporte toutefois une pluralité de sous-réseaux 100, 101, 102 comportant chacun au moins un dispositif nœud de convergence et des nœuds de communication intégrant des passerelles de collecte de technologie LPWAN. Cet aspect est détaillé par la suite en relation avec les Figs. 3B et 3C. Les sous-réseaux 100, 101, 102 implémentent des protocoles de transport respectifs distincts. Il peut y avoir dans le premier réseau plusieurs sous-réseaux qui implémentent un même protocole de transport dès lors que le premier réseau inclut aussi un sous-réseau de protocole de transport différent. Il y a un premier serveur FNS 131, 132, 133 pour chaque sous-réseau 100, 101, 102. Chaque passerelle de collecte du premier réseau communique avec un unique premier serveur FNS 131, 132, 133 associé via un unique nœud de convergence associé.

La Fig. 3A montre, de manière purement illustrative, un autre dispositif terminal 111 en itinérance par transfert multi-réseaux. Cela vise à montrer que les trames ascendantes transmises par chaque dispositif terminal 110, 111 peuvent être captées par des passerelles de collecte du premier réseau qui appartiennent à des sous-réseaux distincts.

Contrairement au système de communication de l'Internet des Objets de la Fig. 1, le système de communication de l'Internet des Objets de la Fig. 3A comporte des connexions entre les passerelles de collecte d'au moins un sous-réseau 100, 101, 102 du premier réseau d'un côté et le cinquième serveur JS 160 du second réseau d'un autre côté. Cet aspect est détaillé ci-après en relation avec la Fig. 4. Il convient de noter que les passerelles de collecte d'un ou plusieurs sous-réseaux, ou de tous les sous-réseaux 100, 101, 102, peuvent comporter ces connexions avec le cinquième serveur JS 160. Si un ou plusieurs sous-réseaux, et leurs connexions avec leurs premiers serveurs FNS 131, 132, 133 respectifs, disposent de performances en termes de latence supérieures à celles des autres sous-réseaux du premier réseau, alors lesdites passerelles de collecte peuvent éviter de mettre en place une connexion directe avec le cinquième serveur JS 160. Il est considéré par la suite, par souci de simplification, que chaque passerelle de collecte du premier sous-réseau dispose d'une connexion directe avec le cinquième serveur JS 160.

Le cinquième serveur JS 160 est déclaré auprès de chacune des passerelles de collecte du premier réseau, qui sont ainsi connectées au cinquième serveur JS 160. Cette déclaration du cinquième serveur JS 160 auprès de chacune des passerelles de collecte du premier réseau est faite à la suite d'un accord d'itinérance conclu entre le premier opérateur et le second opérateur. Le même type de support de communication peut être utilisé entre les passerelles de collecte du premier réseau et le cinquième serveur JS 160 qu'entre lesdites passerelles de collecte et le premier serveur FNS 131, 132, 133 auquel lesdites passerelles de collecte sont respectivement associées. Un autre type de support de communication peut toutefois être utilisé.

Comme détaillé ci-après, cette relation directe entre les passerelles de collecte du premier réseau et le cinquième serveur JS 160 permet de simplifier les échanges de messages en court-circuitant les premiers FNS 131, 132, 133, second SNS 134 et troisième HNS 140 serveurs, et donc réduire la latence induite, lorsque le dispositif terminal 110, 111 rejoint en itinérance par transfert multi-réseaux le système de communication. Chaque passerelle de collecte du premier réseau inclut en outre une interface de communication pour communiquer avec le cinquième serveur JS 160 qui court-circuite aussi le nœud de convergence via lequel ladite passerelle de collecte communique avec le premier serveur FNS 131, 132, 133 qui lui est associé. Cet aspect est détaillé ci-après en relation avec la Fig. 4.

La déclaration du cinquième serveur JS 160 auprès de chacune des passerelles de collecte du premier réseau consiste à fournir l'identifiant, appelé JoinEUI dans les spécifications LoRaWAN 1.1, qui identifie de manière unique le cinquième serveur JS 160. Pour rappel, cet identifiant est inclus par le dispositif terminal 110, 111 dans le message JOIN-REQ que ledit dispositif terminal 110, 111 transmet pour rejoindre le système de communication, et il est donc nécessaire que chaque passerelle de collecte du premier réseau le connaisse au préalable pour faire le lien entre le dispositif terminal 110, 111 en itinérance et le cinquième serveur JS 160.

Dans un mode de réalisation particulier, à la suite de cette déclaration, chacune des passerelles de collecte du premier réseau contacte alors le sixième serveur DNS, qui leur fournit une adresse pour contacter le cinquième serveur JS 160 d'après l'identifiant unique en question.

Dans un mode de réalisation particulier en variante, la déclaration est telle que l'identifiant unique en question est fourni en association avec l'adresse pour contacter le cinquième serveur JS 160.

Dans un mode de réalisation particulier, la déclaration est d'abord faite auprès de chaque premier serveur FNS 131, 132, 133 à la suite de l'accord d'itinérance conclu entre le premier opérateur et le second opérateur, et chaque premier serveur FNS 131, 132, 133 fait suivre la déclaration en question à chacune des passerelles de collecte à laquelle ledit premier serveur FNS 131, 132, 133 est associé. Cela simplifie la déclaration du cinquième serveur JS 160. A noter qu'une possibilité est que chaque premier serveur FNS 131, 132, 133 contacte le sixième serveur DNS, qui lui fournit l'adresse pour contacter le cinquième serveur JS 160 d'après l'identifiant unique en question, et que chaque premier serveur FNS 131, 132, 133 transmette alors à chacune des passerelles de collecte qui lui est associée l'identifiant unique en question, en association avec l'adresse pour contacter le cinquième serveur JS 160.

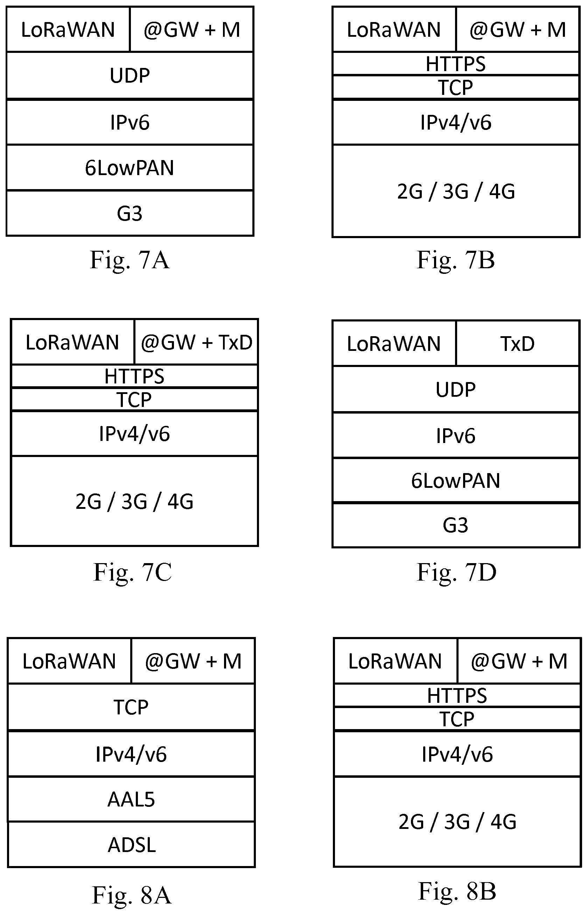

A noter que les communications entre les passerelles de collecte et tout serveur, et entre les serveurs eux-mêmes, reposent préférentiellement sur le protocole IP (« Internet Protocol » en anglais), tel que défini dans le document normatif RFC 791. Cet aspect est détaillé par la suite en relation avec les Figs. 7A à 7D, 8A à 8D, 9A à 9D, 10A et 10B.

La **Fig. 3B** illustre schématiquement le sous-réseau 100 du système de communication de l'Internet des Objets de la Fig.3A. Le sous-réseau 100 comporte des nœuds de communication 170, 171, 172, 173 qui sont connectés à un nœud de convergence 174 du sous-réseau 100. Les nœuds de communication 170, 171, 172, 173 intègrent respectivement des passerelles de collecte GW 123, 124, 125, 126. Certains nœuds de communication 172 peuvent jouer un rôle de relais entre d'autres nœuds de communication 170, 171 et le nœud de convergence 174. Le sous-réseau 100 comporte potentiellement un ou plusieurs autres nœuds de convergence 175 auxquels sont rattachés encore d'autres nœuds de communication (non représentés par souci de simplification). Chaque nœud de convergence 174, 175 du sous-réseau 100 est rattaché au premier serveur FNS 131. Le sous-réseau 100 est préférentiellement un réseau de communication à courants porteurs (« Powerline Communication » en anglais), les nœuds de communication 170, 171, 172, 173 sont des compteurs intelligents SM (« Smart Meters » en anglais) en charge de superviser la distribution et la consommation électrique d'installations électriques associées, et les nœuds de convergence 174, 175 sont des dispositifs concentrateurs de données DC (« Data Concentrateurs » en anglais) en charge d'interfacer lesdits compteurs intelligents SM avec un serveur (non représenté) en charge de configurer lesdits compteurs intelligents SM et de récolter des relevés de comptage fournis par lesdits compteurs électriques SM. Par exemple, les communications entre les nœuds de communication 170, 171, 172, 173 et le nœud de convergence 174 sont supportées par le protocole G3-PLC ou par le protocole PRIME.

La **Fig. 3C** illustre schématiquement un autre sous-réseau 101, 102 du système de communication de l'Internet des Objets de la Fig. 3A. Le sous-réseau 101, 102 comporte des nœuds de communication 180, 181, 182 qui sont connectés à un nœud de convergence 190 du sous-réseau 101, 102. Les nœuds de communication 180, 181, 182 intègrent respectivement des passerelles de collecte GW 127, 128, 129. Le sous-réseau 100 comporte potentiellement un ou plusieurs autres nœuds de convergence 191 auxquels sont rattachés encore d'autres nœuds de communication (non représentés par souci de simplification). Chaque nœud de convergence 190, 191 du sous-réseau 101 est rattaché au premier serveur FNS 132. Chaque nœud de convergence 190, 191 du sous-réseau 102 est rattaché au premier serveur FNS 133. Les sous-réseaux 101, 102 sont préférentiellement des réseaux de fourniture d'accès à l'Internet, les nœuds de communication 180, 181, 182 sont des routeurs sous forme de passerelles résidentielles RGW et les nœuds de convergence 190, 191 sont des multiplexeurs d'accès à ligne d'abonné numérique DSLAM (« Digital Subscriber Line Access Multiplexer » en anglais). Par exemple, les communications entre les nœuds de communication 180, 181, 182 et le nœud de convergence 190 dans le sous-réseau 101 sont supportées par le protocole de ligne d'abonné numérique asymétrique ADSL (« Asymmetric Digital Subscriber Line » en anglais), ADSL2 ou ADSL2+. Par exemple, les communications entre les nœuds de communication 180, 181, 182 et le nœud de convergence 190 dans le sous-réseau 102 sont supportées par le protocole de ligne d'abonné numérique à très haut débit VDSL (« Very-high-bit-rate Digital Subscriber Line » en anglais) ou VDSL2.

La **Fig. 4** illustre schématiquement un nœud de communication COM 200 d'un sous-réseau du système de communication de l'Internet des Objets de la Fig. 3A, comme par exemple introduit dans les Figs. 3B et 3C. Le nœud de communication COM 200 intègre un ou plusieurs composants électroniques exécutant des fonctionnalités de passerelle de collecte GW 440. Le nœud de communication COM 200 intègre en outre un ou plusieurs composants électroniques exécutant des fonctionnalités principales MFC 430, qui sont liées au comptage d'électricité consommée dans l'exemple de sous-réseau 100 décrit en relation avec la Fig. 3B, et qui sont liées au routage de fourniture d'accès à l'Internet dans l'exemple de sous-réseau 101, 102 décrit en relation avec la Fig. 3C. Le nœud de communication COM 200 peut aussi intégrer des fonctionnalités auxiliaires dans le ou les composants électroniques exécutant les fonctionnalités principales MFC 430.

Le ou les composants électroniques exécutant les fonctionnalités principales MFC 430 sont connectés à une première interface de communication IF1 410 qui permet de communiquer avec le nœud de convergence auquel ledit nœud de communication COM 200 est rattaché, et peuvent être connectés à au moins une seconde interface de communication IF2 411, pour permettre de communiquer dans le cadre des fonctionnalités principales MFC 430 et éventuellement des fonctionnalités auxiliaires susmentionnées.

Le ou les composants électroniques exécutant les fonctionnalités de passerelle de collecte GW 440 sont connectés à la première interface de communication IF1 410, ce qui permet de communiquer avec le premier serveur FNS 131, 132, 133 via le nœud de convergence auquel ledit nœud de communication COM 200 est rattaché. Le ou les composants électroniques exécutant les fonctionnalités de passerelle de collecte GW 440 sont en outre connectés à une troisième interface de communication IF1 412, pour permettre de communiquer par voie radio avec les dispositifs terminaux 110, 111. Le ou les composants électroniques exécutant les fonctionnalités de passerelle de collecte GW 440 sont en outre connectés à une quatrième interface de communication IF4 413, pour permettre de communiquer avec le cinquième serveur JS 160 en court-circuitant les premiers serveurs FNS 131, 132, 133, second serveur SNS 134 et troisième serveur HNS 140, ainsi que le nœud de convergence auquel ledit nœud de communication COM 200 est rattaché.

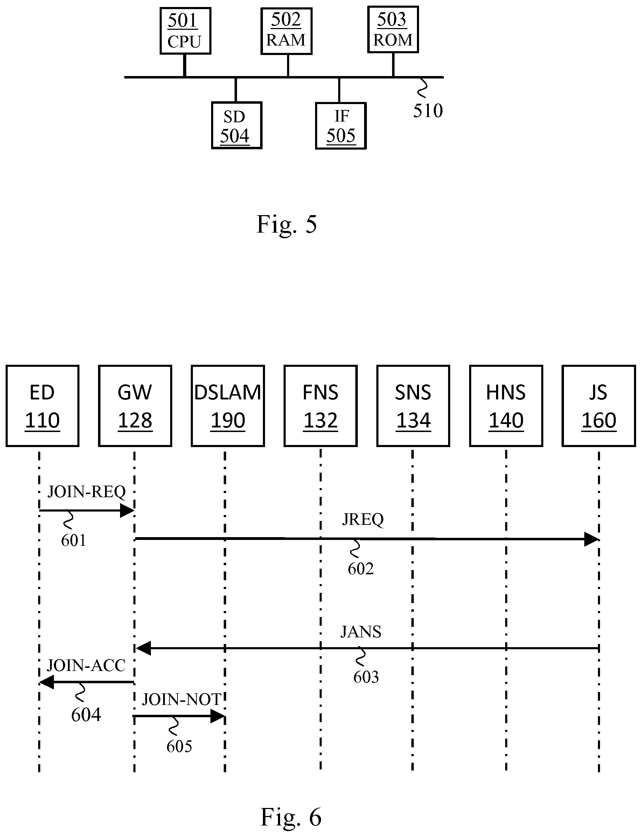

La **Fig. 5** illustre schématiquement un exemple d'architecture matérielle d'un dispositif de communication du système de communication de la Fig. 3A. Chaque dispositif terminal et/ou chaque nœud de communication intégrant une passerelle de collecte et/ou chaque nœud de convergence et/ou chaque serveur de réseau cœur peuvent être construits sur la base d'une telle architecture matérielle.

Le dispositif de communication comporte, reliés par un bus de communication 510 : un processeur ou CPU (« Central Processing Unit » en anglais) 501 ; une mémoire vive RAM (« Random Access Memory » en anglais) 502 ; une mémoire morte ROM (« Read Only Memory » en anglais) 503 ; une unité de stockage ou un lecteur de support de stockage, comme un lecteur de cartes SD (« Secure Digital » en anglais) 504 ou un disque dur HDD (« Hard Disk Drive » en anglais) ; une ou plusieurs interfaces de communication IF 505.

Le processeur 501 est capable d'exécuter des instructions chargées dans la mémoire RAM 502 à partir de la mémoire ROM 503, d'une mémoire externe, d'un support de stockage, ou d'un réseau de communication. Lorsque le dispositif de communication en question est mis sous tension, le processeur 501 est capable de lire de la mémoire RAM 502 des instructions et de les exécuter. Ces instructions forment un programme d'ordinateur causant la mise en œuvre, par le processeur 501, de tout ou partie des algorithmes et étapes décrits ici en relation avec le dispositif de communication en question.

Ainsi, tout ou partie des algorithmes et étapes décrits ici peut être implémenté sous forme logicielle par exécution d'un ensemble d'instructions par une machine programmable, telle qu'un DSP (« Digital Signal Processor » en anglais) ou un microcontrôleur. Tout ou partie des algorithmes et étapes décrits ici peut aussi être implémenté sous forme matérielle par une machine ou un composant dédié, tel qu'un FPGA (« Field-Programmable Gate Array » en anglais) ou un ASIC (« Application-Specific Integrated Circuit » en anglais). D'une manière générale, le dispositif de communication en question comporte de la circuiterie électronique adaptée et configurée pour implémenter les algorithmes et étapes décrits ici en relation avec le dispositif de communication en question.

La **Fig. 6** illustre schématiquement des échanges de messages survenant dans le système de communication de l'Internet des Objets de la Fig. 3, lorsque le dispositif terminal 110 (par exemple) rejoint en itinérance par transfert multi-réseaux le système de communication. Ces messages sont échangés dans des trames respectives.

Dans une étape 601, le dispositif terminal 110 transmet un message JOIN-REQ via son interface radio. Cette étape est identique à l'étape 201 décrite en relation avec la Fig. 2. Ce message JOIN-REQ inclut donc un identifiant unique du dispositif terminal 110, appelé DevEUI dans les spécifications LoRaWAN 1.1, ainsi que l'identifiant unique du cinquième serveur JS 160.

Ce message JOIN-REQ est capté par au moins une passerelle de collecte du premier réseau. Considérons que ce message JOIN-REQ est capté par la passerelle de collecte 128. Dans une étape 602, la passerelle de collecte 128 relaie directement le message JOIN-REQ au cinquième serveur JS 160, sous la forme d'un message JREQ tel que précédemment évoqué. Le premier serveur FNS 132 auquel la passerelle de collecte 128 est associée, le second serveur SNS 134 et le troisième serveur HNS 140 sont ainsi court-circuités. Il en va de même du nœud de convergence DSLAM 190. Grâce à l'identifiant qui est contenu dans le message JOIN-REQ et qui identifie de manière unique le cinquième serveur JS 160, la passerelle de collecte 128 détecte que le dispositif terminal 110 est en itinérance et que le réseau cœur du second opérateur est en charge de vérifier que le dispositif terminal 110 dispose d'une souscription adaptée, et préférentiellement d'authentifier le dispositif terminal 110, c'est-à-dire de confirmer que le dispositif terminal ayant transmis le message JOIN-REQ est effectivement le dispositif terminal 110 correspondant à l'identifiant unique fourni.

Dans le cas particulier des formats de messages définis dans les spécifications LoRaWAN 1.1., le message JREQ prend la forme d'un message JoinReq. La passerelle de collecte 128 recopie dans un champ dédié du message JoinReq l'identifiant unique de dispositif terminal, appelé DevEUI, que le dispositif terminal 110 en itinérance a inscrit dans le message Join-request transmis à l'étape 601. De plus, les valeurs des champs MACversion, DLSettings et RxDelay sont fixées à des valeurs par défaut. A noter que les valeurs DLSettings et RxDelay peuvent être modifiées ultérieurement auprès du dispositif terminal 110 par commande MAC en provenance du second serveur SNS 134, pour les ajuster aux besoins effectifs du réseau cœur du premier opérateur.

Sur réception du message JREQ, le cinquième serveur JS 160 vérifie que le dispositif terminal 110 dispose d'une souscription adaptée pour accéder aux services du quatrième serveur AS 150 en itinérance par transfert multi-réseaux. Préférentiellement, le cinquième serveur JS 160 effectue l'authentification du dispositif terminal 110. Dans un mode de réalisation particulier, en cas d'authentification réussie, le cinquième serveur JS 160 obtient (e.g., génère) les clefs de sécurité nécessaires au dispositif terminal 110 pour communiquer de manière chiffrée dans le système de communication et bénéficier des services du quatrième serveur AS 150.

Le cinquième serveur JS 160 construit un message JANS qui inclut un message JOIN-ACC à relayer au dispositif terminal 110. Lorsque les communications ultérieures avec le dispositif terminal 110 doivent être chiffrées et que le dispositif terminal 110 est effectivement authentifié par le cinquième serveur JS 160, le message JOIN-ACC inclut aussi les informations permettant au dispositif terminal 110 d'obtenir les clefs de sécurité permettant de sécuriser les échanges avec le dispositif terminal 110. Le message JOIN-ACC inclut préférentiellement aussi, sous forme chiffrée par une clef connue du dispositif terminal 110, la clef de sécurité à utiliser pour communiquer avec le quatrième serveur AS 150. Cette dernière clef de sécurité est chiffrée car elle n'a pas à être connue des passerelles de collecte du premier réseau, ni du réseau cœur du premier opérateur. Le message JANS peut aussi inclure, ailleurs que dans le message JOIN-ACC les clefs de sécurité permettant de sécuriser les échanges avec le dispositif terminal 110 (à l'exception donc de la clef de sécurité permettant au dispositif terminal 110 de communiquer avec le quatrième serveur AS 150). Cela simplifie la récupération de ces clefs de sécurité par la passerelle de collecte à laquelle le message JANS va être adressé.

Lorsque les formats de messages définis dans les spécifications LoRaWan 1.1 sont utilisés, le cinquième serveur JS 160 peut modifier les valeurs par défaut proposées dans les champs MACversion, DLSettings et RxDelay du message JREQ transmis par la passerelle de collecte 128. C'est notamment le cas lorsque les accords d'itinérance conclus entre le premier opérateur et le second opérateur définissent des valeurs par défaut à utiliser et que ces valeurs par défaut sont inscrites en mémoire du cinquième serveur JS 160 du second opérateur sans qu'il n'y ait besoin de les inscrire en mémoire des passerelles de collecte du premier opérateur. Comme déjà indiqué, les valeurs DLSettings et RxDelay peuvent être modifiées ultérieurement auprès du dispositif terminal 110 par commande MAC en provenance du second serveur SNS 134, pour les ajuster aux besoins effectifs du réseau cœur du premier opérateur.

Dans un mode de réalisation particulier, pour pouvoir communiquer dans le système de communication, le dispositif terminal 110 doit se voir attribuer dynamiquement une adresse, appelée DevAddr dans les spécifications LoRaWan 1.1. Dans le cadre d'une itinérance selon l'architecture de la Fig. 1, cette adresse est attribuée par le second serveur SNS 134. Ici, comme le second serveur SNS 134 n'est pas impliqué dans le relais du message JOIN-REQ, c'est au cinquième serveur JS 160 d'attribuer cette adresse. Pour ce faire, la gestion d'un sous-ensemble prédéterminé de la plage d'adresses du premier opérateur est exclusivement confiée au cinquième serveur JS 160 du second opérateur dans le cadre de l'accord d'itinérance. On parle de provisionnement (« provisioning » en anglais) d'adresses. Le cinquième serveur JS 160 attribue alors une adresse dudit sous-ensemble prédéterminé de la plage d'adresses du premier opérateur lorsque ledit cinquième serveur JS 160 authentifie avec succès un dispositif terminal en itinérance, et indique dans le message JOIN-ACC quelle adresse a été ainsi attribuée. Ce provisionnement d'adresses peut être configuré auprès du second serveur SNS 134 et du cinquième serveur JS 160 à la suite de l'accord d'itinérance. En variante, la plage d'adresses du premier opérateur dont la gestion est confiée au cinquième serveur JS 160 du second opérateur est négociée par échanges de messages entre le second serveur SNS 134 et le cinquième serveur JS 160.

Le cinquième serveur JS 160 doit alors distinguer les cas où ledit cinquième serveur JS 160 doit attribuer une adresse (dispositif terminal en itinérance) des cas où ledit cinquième serveur JS 160 ne doit pas attribuer d'adresse (dispositif terminal qui n'est pas en itinérance). Pour ce faire, le format des messages JREQ envoyés par les passerelles de collecte peut être distinct du format des messages JREQ envoyés par le troisième serveur HNS 140, i.e., de format différent. Une valeur spécifique d'un champ de message JREQ peut en variante être réservée aux passerelles de collecte et interdite au troisième serveur HNS 140. Dans une autre variante, le cinquième serveur JS 160 ayant connaissance de l'adresse du troisième serveur HNS 140, le cinquième serveur JS 160 est capable de détecter qu'un message JREQ reçu est issu d'un autre équipement que le troisième serveur HNS 140 et décider le cas échéant d'attribuer une adresse parmi les adresses provisionnées.

Ensuite, dans une étape 603, le cinquième serveur JS 160 transmet le message JANS en réponse au message JREQ reçu à l'étape 602. Le cinquième serveur JS 160 répond ainsi directement à la passerelle de collecte 128.

Puis, dans une étape 604, la passerelle de collecte 128 relaie par voie radio le message JOIN-ACC à l'attention du dispositif terminal 110. La passerelle de collecte 128 récupère dans le message JOIN-ACC l'adresse attribuée au dispositif terminal 110 par le cinquième serveur DNS 160. La passerelle de collecte 128 récupère aussi dans le message JANS, le cas échéant, les clefs de sécurité utiles au premier réseau cœur. Dans une étape 605, la passerelle de collecte 128 informe le réseau cœur du premier opérateur que le message JOIN-ACC a été transmis au dispositif terminal 110. Pour ce faire, la passerelle de collecte 121 transmet au premier serveur FNS 132 un message de notification JOIN-NOT incluant l'identifiant unique du dispositif terminal 110, ainsi que l'adresse attribuée par le cinquième serveur JS 160 au dispositif terminal 110. Le réseau cœur du premier réseau est ainsi informé de la présence du dispositif terminal 110 en itinérance.

Dans le cas où les communications ultérieures avec le dispositif terminal 110 doivent être chiffrées, le message de notification JOIN-NOT inclut les clefs de sécurité récupérées par la passerelle de collecte 128. Cela permet au réseau cœur du premier réseau d'authentifier et de déchiffrer les communications du dispositif terminal 110 pour le compte du second opérateur dans le cadre de l'itinérance par transfert multi-réseaux. Charge au premier serveur FNS 132 de faire suivre les informations adéquates au second serveur SNS 134 (non représenté sur la Fig. 6). Dans le cas où une délégation (telle que décrite ci-après) est mise en place, cela permet aussi au réseau cœur du premier réseau de confier la délégation à une autre passerelle de collecte.

Dans le cas où le message JOIN-REQ est capté par au moins une autre passerelle de collecte du premier réseau, chaque dite autre passerelle de collecte relaie aussi le message JOIN-REQ au cinquième serveur JS 160, de la même manière que décrite ci-dessus vis-à-vis de la passerelle de collecte 128. Dans le cas d'un message Join-request selon les spécifications LoRaWAN 1.1, il est par exemple possible pour le cinquième serveur JS 160 de détecter cette situation en notant que le champ « Nonce » est de même valeur dans les différents messages JOIN-REQ ainsi reçus. Le cinquième serveur JS 160 est alors en charge d'effectuer la déduplication des messages JOIN-REQ ainsi reçus et de décider à quelle passerelle de collecte répondre parmi les passerelles de collecte ayant relayé le message JOIN-REQ. Dans un mode de réalisation particulier, le cinquième serveur JS 160 répond à la toute première passerelle de collecte qui lui a relayé le message JOIN-REQ. En variante, le cinquième serveur JS 160 répond à une passerelle de collecte sélectionnée aléatoirement parmi les passerelles de collecte ayant relayé le message JOIN-REQ. Dans une autre variante, chaque passerelle de collecte relayant le message JOIN-REQ indique en association un indicateur de force de réception de signal RSSI (« Received Signal Strength Indicator » en anglais) en provenance du dispositif terminal 110, et le cinquième serveur JS 160 répond à la passerelle de collecte qui fournit le meilleur indicateur de force de réception de signal en provenance du dispositif terminal 110.

Ainsi, en assurant les communications directement entre les passerelles de collecte du premier opérateur et le cinquième serveur JS 160 du second opérateur, la latence entre la transmission du message JOIN-REQ par le dispositif terminal 110 en itinérance et la réception du message JOIN-ACC par ledit dispositif terminal 110 est réduite.

Lorsque le dispositif terminal 110 a reçu le message JOIN-ACC qui confirme que l'authentification a réussi, le dispositif terminal 110 a rejoint le système de communication. Le dispositif terminal 110 est alors autorisé à effectuer des communications ascendantes à destination du quatrième serveur AS 150 et à recevoir des communications descendantes de la part du réseau cœur. Les communications entre le dispositif terminal 110 et le quatrième serveur AS 150 sont effectuées par relais successifs du nœud de convergence DSLAM 190 et des premier FNS 132, second SNS 134 et troisième HNS 140 serveurs jusqu'au quatrième serveur AS 150.

Lorsque les communications sont chiffrées, les communications ascendantes sont authentifiées par le réseau cœur du premier réseau grâce aux clefs de sécurité fournies par le cinquième serveur JS 160, typiquement par le second serveur SNS 134 après relais par le premier serveur FNS 132. Le contenu des communications ascendantes est alors relayé par le second serveur SNS 134 au troisième serveur HNS 140 qui relaie ensuite ledit contenu au quatrième serveur AS 150 pour traitement applicatif. En charge de la gestion de la couche MAC, le second serveur SNS 134 assure l'acquittement des trames ascendantes en provenance du dispositif terminal 110 en itinérance et relaie jusqu'audit dispositif terminal 110 les données reçues en provenance du quatrième serveur AS 150 à l'attention dudit dispositif terminal 110 en itinérance et, le cas échéant, effectue le chiffrement des trames descendantes.

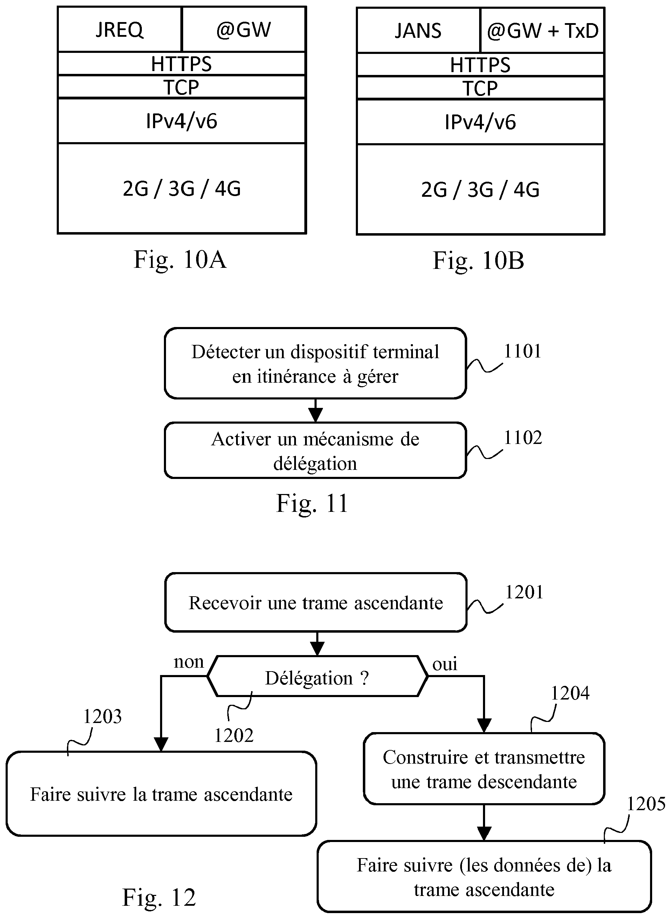

Les questions de latence sont moins prépondérantes dans le cas du traitement desdites trames ascendantes car il n'y a pas d'intervention du cinquième serveur JS 160 dont les traitements, notamment pour l'authentification et l'obtention des clefs de sécurité, ont un impact significatif au moment où le dispositif terminal rejoint le système de communication. Un mode de réalisation particulier permet toutefois d'améliorer aussi la latence dans le cadre du traitement des trames ascendantes et de la gestion des trames descendantes. La gestion des acquittements des trames ascendantes est alors notamment confiée à une passerelle de collecte. On parle alors de « délégation ». Cette approche par délégation est particulièrement avantageuse dans le cas des dispositifs terminaux qui écoutent le médium de communication essentiellement pendant des fenêtres de réception définies d'après des instants de transmissions de leurs trames ascendantes, c'est-à-dire les dispositifs terminaux de « Classe A » et de « Classe B » dans les spécifications LoRaWAN 1.1. Cet aspect est détaillé ci-après en relation avec les Figs. 11 à 13.

La **Fig. 7A** illustre schématiquement une première encapsulation de messages utilisée dans l'exemple où le sous-réseau 100 est un réseau à courants porteurs conforme au protocole G3-PLC. La couche protocolaire inférieure est celle du protocole G3-PLC, surmontée par une couche protocolaire de type 6LowPAN (« IPv6 Low power Wireless Personal Area Networks » en anglais), surmontée par une couche protocolaire de type IPv6, surmontée d'une couche protocolaire de type UDP (« User Datagram Protocol » en anglais). A noter que le protocole TCP (« Transmission Control Protocol » en anglais) peut être utilisé à la place du protocole UDP. Ces couches forment un empilement protocolaire encapsulant des messages LoRaWAN relayés depuis la passerelle de collecte GW intégrée à un compteur intelligent SM vers le nœud de convergence DC auquel est rattaché ledit compteur intelligent SM. Les messages LoRaWAN sont accompagnés de conteneurs (« container » en anglais) précisant les adresses IP des passerelles de collecte GW respectivement concernées et d'autres informations M, telles que des indicateurs de force de réception de signal RSSI et des informations représentatives des instants respectifs de réception desdits messages LoRaWAN en provenance des dispositifs terminaux respectivement concernés.

La **Fig. 7B** illustre schématiquement une seconde encapsulation de messages utilisée dans l'exemple où le sous-réseau 100 est un réseau à courants porteurs, par exemple conforme au protocole G3-PLC. La couche protocolaire inférieure est celle d'un protocole d'accès mobile à l'Internet (par exemple de type 2G, 3G ou 4G), surmontée par une couche protocolaire de type IPv6, surmontée d'une couche protocolaire de type TCP, surmontée d'une couche protocolaire de type HTTPS (« HyperText Transfer Protocol Secure » en anglais). Ces couches forment un empilement protocolaire encapsulant des messages LoRaWAN relayés depuis le nœud de convergence DC considéré vers le premier serveur FNS 131. Les messages LoRaWAN sont accompagnés respectivement des mêmes conteneurs que dans la Fig. 7A.

La **Fig. 7C** illustre schématiquement une troisième encapsulation de messages utilisée dans l'exemple où le sous-réseau 100 est un réseau à courants porteurs, par exemple conforme au protocole G3-PLC. La couche protocolaire inférieure est celle du protocole d'accès mobile à l'Internet de la Fig. 7B, surmontée par une couche protocolaire de type IPv6, surmontée d'une couche protocolaire de type TCP, surmontée d'une couche protocolaire de type HTTPS. Ces couches forment un empilement protocolaire encapsulant des messages LoRaWAN relayés depuis le premier serveur FNS 131 vers le nœud de convergence DC considéré. Les messages LoRaWAN sont accompagnés de conteneurs respectifs précisant les adresses IP des passerelles de collecte GW respectivement concernées et des informations TxD représentatives des instants respectifs auxquels lesdits messages LoRaWAN sont supposés être transmis aux dispositifs terminaux concernés.

La **Fig. 7D** illustre schématiquement une quatrième encapsulation de messages utilisée dans l'exemple où le sous-réseau 100 est un réseau à courants porteurs conforme au protocole G3-PLC. La couche protocolaire inférieure est celle du protocole G3-PLC, surmontée par une couche protocolaire de type 6LowPAN, surmontée par une couche protocolaire de type IPv6, surmontée d'une couche protocolaire de type UDP, comme pour la Fig. 7A. Ces couches forment un empilement protocolaire encapsulant des messages LoRaWAN relayés depuis le nœud de convergence DC concerné vers le compteur intelligent SM intégrant la passerelle de collecte intégrée GW concernée. Les messages LoRaWAN sont accompagnés de conteneurs précisant les informations TxD représentatives des instants respectifs auxquels lesdits messages LoRaWAN sont supposés être transmis aux dispositifs terminaux concernés.

La **Fig. 8A** illustre schématiquement une cinquième encapsulation de messages utilisée dans l'exemple où le sous-réseau 101 est un réseau de fourniture d'accès à l'Internet de type ADSL, ADSL2 ou ADSL2+. La couche protocolaire inférieure est celle du protocole ADSL, ADSL2 ou ADSL2+, surmontée par une couche protocolaire de type AAL5 (« Asynchronous Transfer Mode Adaptation Layer 5 » en anglais), surmontée par une couche protocolaire de type IPv6, surmontée d'une couche protocolaire de type TCP. Ces couches forment un empilement protocolaire encapsulant des messages LoRaWAN relayés depuis la passerelle de collecte intégrée à une passerelle résidentielle RGW vers le nœud de convergence DSLAM auquel est rattachée ladite passerelle résidentielle RGW. Les messages LoRaWAN sont accompagnés de conteneurs précisant les adresses IP des passerelles de collecte respectivement concernées et d'autres informations M, telles que les indicateurs de force de réception de signal RSSI et les informations représentatives des instants respectifs de réception desdits messages LoRaWAN en provenance des dispositifs terminaux respectivement concernés.

La **Fig. 8B** illustre schématiquement une sixième encapsulation de messages utilisée dans l'exemple où le sous-réseau 101 est un réseau de fourniture d'accès à l'Internet de type ADSL, ADSL2 ou ADSL2+. La sixième encapsulation, qui forme un empilement protocolaire encapsulant des messages LoRaWAN relayés depuis le nœud de convergence DSLAM considéré vers le premier serveur FNS 132, est identique à celle de la Fig. 7B.

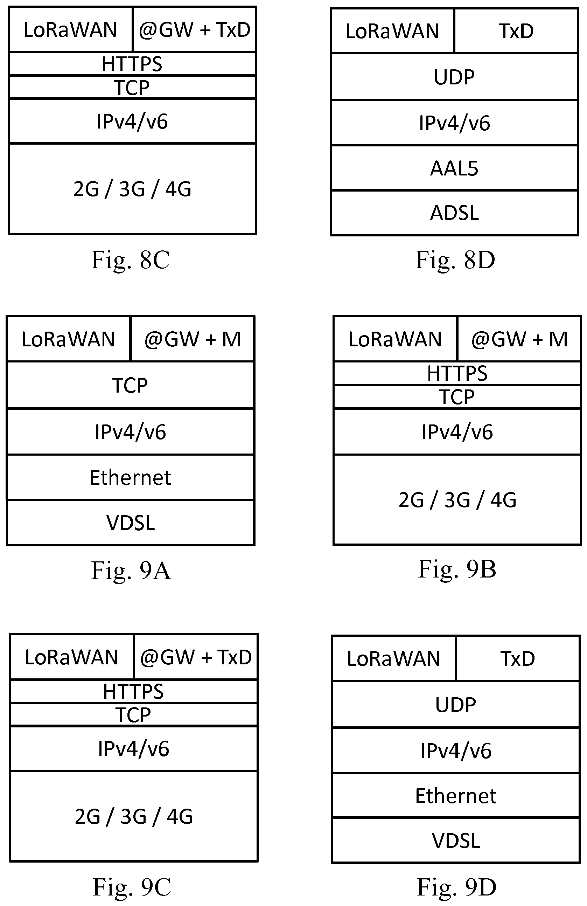

La **Fig. 8C** illustre schématiquement une septième encapsulation de messages utilisée dans l'exemple où le sous-réseau 101 est un réseau de fourniture d'accès à l'Internet de type ADSL, ADSL2 ou ADSL2+. La septième encapsulation, qui forme un empilement protocolaire encapsulant des messages LoRaWAN relayés depuis le premier serveur FNS 132 vers le nœud de convergence DSLAM concerné, est identique à celle de la Fig. 7C.

La **Fig. 8D** illustre schématiquement une huitième encapsulation de messages utilisée dans l'exemple où le sous-réseau 101 est un réseau de fourniture d'accès à l'Internet de type ADSL, ADSL2 ou ADSL2+. La couche protocolaire inférieure est celle du protocole ADSL, ADSL2 ou ADSL2+, surmontée par une couche protocolaire de type AAL5, surmontée par une couche protocolaire de type IPv6, surmontée d'une couche protocolaire de type TCP, comme pour la Fig. 8A. Ces couches forment un empilement protocolaire encapsulant des messages LoRaWAN relayés depuis le nœud de convergence DSLAM concerné vers la passerelle résidentielle RGW intégrant la passerelle de collecte GW intégrée concernée. Les messages LoRaWAN sont accompagnés de conteneurs précisant les informations TxD représentatives des instants respectifs auxquels lesdits messages LoRaWAN sont supposés être transmis aux dispositifs terminaux concernés.

La **Fig. 9A** illustre schématiquement une neuvième encapsulation de messages utilisée dans l'exemple où le sous-réseau 102 est un réseau de fourniture d'accès à l'Internet de type VDSL ou VDSL2. La couche protocolaire inférieure est celle du protocole VDSL ou VDSL2, surmontée par une couche protocolaire de type Ethernet, surmontée par une couche protocolaire de type IPv6, surmontée d'une couche protocolaire de type TCP. Ces couches forment un empilement protocolaire encapsulant des messages LoRaWAN relayés depuis la passerelle de collecte intégrée à une passerelle résidentielle RGW vers le nœud de convergence DSLAM auquel est rattachée ladite passerelle résidentielle RGW. Les messages LoRaWAN sont accompagnés de conteneurs précisant les adresses IP des passerelles de collecte respectivement concernées et d'autres informations M, telles que les indicateurs de force de réception de signal RSSI et les informations représentatives des instants respectifs de réception desdits messages LoRaWAN en provenance du dispositif terminal concerné.

La **Fig. 9B** illustre schématiquement une dixième encapsulation de messages utilisée dans l'exemple où le sous-réseau 102 est un réseau de fourniture d'accès à l'Internet de type VDSL ou VDSL2. La dixième encapsulation, qui forme un empilement protocolaire encapsulant des messages LoRaWAN relayés depuis le nœud de convergence DSLAM considéré vers le premier serveur FNS 133, est identique à celle de la Fig. 7B.

La **Fig. 9C** illustre schématiquement une onzième encapsulation de messages utilisée dans l'exemple où le sous-réseau 102 est un réseau de fourniture d'accès à l'Internet de type VDSL ou VDSL2. La onzième encapsulation, qui forme un empilement protocolaire encapsulant des messages LoRaWAN relayés depuis le premier serveur FNS 133 vers le nœud de convergence DSLAM concerné, est identique à celle de la Fig. 7C.

La **Fig. 9D** illustre schématiquement une douzième encapsulation de messages utilisée dans l'exemple où le sous-réseau 102 est un réseau de fourniture d'accès à l'Internet de type VDSL ou VDSL2. La couche protocolaire inférieure est celle du protocole VDSL ou VDSL2, surmontée par une couche protocolaire de type Ethernet, surmontée par une couche protocolaire de type IPv6, surmontée d'une couche protocolaire de type TCP, comme pour la Fig. 9A. Ces couches forment un empilement protocolaire encapsulant des messages LoRaWAN relayés depuis le nœud de convergence DSLAM concerné vers la passerelle résidentielle RGW intégrant la passerelle de collecte GW intégrée concernée. Les messages LoRaWAN sont accompagnés de conteneurs précisant les informations TxD représentatives des instants respectifs auxquels lesdits messages LoRaWAN sont supposés être transmis aux dispositifs terminaux concernés.

La **Fig. 10A** illustre schématiquement une treizième encapsulation de messages utilisée dans le système de communication de l'Internet des Objets de la Fig. 3A, lorsqu'une passerelle de collecte GW communique directement avec le cinquième serveur JS 160. La couche protocolaire inférieure est celle d'un protocole d'accès mobile à l'Internet (par exemple de type 2G, 3G ou 4G), surmontée par une couche protocolaire de type IPv6, surmontée d'une couche protocolaire de type TCP, surmontée d'une couche protocolaire de type HTTPS. Ces couches forment un empilement protocolaire encapsulant des messages JREQ, tels qu'évoqués en relation avec la Fig. 6, transmis depuis les passerelles de collecte GW respectivement concernées vers le cinquième serveur JS 160. Les messages JREQ sont accompagnés de conteneurs respectifs précisant les adresses IP des passerelles de collecte GW respectivement concernées.

La **Fig. 10B** illustre schématiquement une quatorzième encapsulation de messages utilisée dans le système de communication de l'Internet des Objets de la Fig. 3A, lorsque le cinquième serveur JS 160 communique directement avec une passerelle de collecte GW. La couche protocolaire inférieure est celle du protocole d'accès mobile à l'Internet de la Fig. 10A, surmontée par une couche protocolaire de type IPv6, surmontée d'une couche protocolaire de type TCP, surmontée d'une couche protocolaire de type HTTPS. Ces couches forment un empilement protocolaire encapsulant des messages JANS transmis depuis le cinquième serveur JS 160 vers les passerelles de collecte GW respectivement concernées. Les messages JANS sont accompagnés de conteneurs respectifs précisant les adresses IP des passerelles de collecte GW respectivement concernées et des informations TxD représentatives des instants respectifs auxquels les messages JOIN-ACC correspondants sont supposés être transmis aux dispositifs terminaux concernés.

A noter qu'en variante, il est possible d'utiliser le protocole IPv4 au lieu du protocole IPv6 pour toutes les encapsulations protocolaires relatives aux Figs. 7A à 10B, sauf pour les Figs. 7A et 7D qui ne comportent que le protocole IPv6.

La **Fig. 11** illustre schématiquement un algorithme d'activation de délégation vis-à-vis d'un dispositif terminal en itinérance par transfert multi-réseaux, dans un mode de réalisation particulier. L'algorithme de la Fig. 11 est implémenté par chaque passerelle de collecte du premier réseau. Considérons à titre illustratif que l'algorithme de la Fig. 11 est implémenté par la passerelle de collecte 128.

Dans une étape 1101, la passerelle de collecte 128 détecte un dispositif terminal en itinérance à gérer. C'est le cas lorsque la passerelle de collecte 128 a transmis un message JREQ au cinquième serveur JS 160 pour ledit dispositif terminal en itinérance et a reçu en retour un message JANS de la part du cinquième serveur JS 160. On peut alors parler de « passerelle de collecte élue » puisqu'elle a été sélectionnée, ici par le cinquième serveur JS 160, pour la mise en place de la délégation. Un autre cas apparaît lorsque le premier serveur FNS 132, ou le second serveur SNS 134, décide ultérieurement de confier la délégation à une autre passerelle de collecte GW, auquel cas le premier serveur FNS 132 en informe la passerelle de collecte GW à laquelle la délégation était jusqu'alors confiée, en attend un acquittement. Ensuite, le premier serveur FNS 132, ou le second serveur SNS 134 via le premier FNS 131, 133 concerné, envoie à cette autre passerelle de collecte GW un ordre d'activation de la délégation pour ledit dispositif terminal en itinérance par transfert multi-réseaux. En effet, la délégation vis-à-vis d'un dispositif terminal ne peut être confiée qu'à une seule passerelle de collecte GW à la fois, pour éviter tout conflit d'acquittement de trame ascendante.

Dans une étape 1102, la passerelle de collecte 128 active en interne la délégation pour le dispositif terminal en itinérance en question. La passerelle de collecte 128 garde ainsi trace de devoir acquitter, pour le compte du réseau cœur du premier réseau, les trames ascendantes reçues dudit dispositif terminal en itinérance.

Dans le cadre de l'activation de la délégation, la passerelle de collecte 128 initialise un tampon (« buffer » en anglais) dédié aux transmissions descendantes à destination du dispositif terminal en question. Ce tampon est donc affecté audit dispositif terminal en itinérance et permet de rendre asynchrones, du point de vue du réseau cœur, les transmissions descendantes à destination dudit dispositif terminal en itinérance par rapport aux transmissions ascendantes en provenance dudit dispositif terminal en itinérance. Dans le cas où le premier serveur FNS 132 cherche à confier la délégation à une autre passerelle de collecte GW, la passerelle de collecte 128 vérifie si le tampon associé à la délégation en question est vide ou pas. En d'autres termes, la passerelle de collecte 128 vérifie si des données utiles à l'attention du dispositif terminal en itinérance en question sont encore en attente de transmission. Si le tampon est vide, la passerelle de collecte 128 est autorisée à désactiver la délégation et envoyer un acquittement au premier serveur FNS 130 ; sinon, la passerelle de collecte 128 doit continuer d'acquitter les trames ascendantes en provenance dudit dispositif terminal en itinérance jusqu'à ce que le tampon devienne vide. Une fois le tampon vide, la passerelle de collecte 128 arrête d'acquitter les trames ascendantes en provenance dudit dispositif terminal en itinérance, transmet l'acquittement au premier serveur FNS 132, et libère le tampon qui était affecté à la délégation en question. Dans certains modes de réalisation, des compteurs de trames ascendantes sont maintenus par les dispositifs terminaux et des compteurs de trames descendantes sont maintenus par le réseau cœur. Les valeurs courantes de ces compteurs sont indiquées respectivement dans des champs dédiés des trames ascendantes et des trames descendantes. Dans le cas d'une délégation, le compteur de trames descendantes associé au dispositif terminal en itinérance auquel la délégation s'applique est maintenu par la passerelle de collecte GW élue. Alors, dans l'acquittement transmis au premier serveur FNS 132, la passerelle de collecte 128 inclut la valeur du compteur de trames descendantes. Le premier serveur FNS 132, ou le serveur SNS 134 le cas échéant, en informe l'autre passerelle de collecte GW à laquelle la délégation est confiée, de manière que cette autre passerelle de collecte GW puisse assurer la continuité du comptage des trames descendantes. Cela permet d'assurer que la délégation reste transparente pour ledit dispositif terminal en itinérance.

La **Fig. 12** illustre schématiquement un algorithme de traitement de trame ascendante. L'algorithme de la Fig. 12 est implémenté par chaque passerelle de collecte du premier réseau, dans un mode de réalisation particulier. Considérons à titre illustratif que l'algorithme de la Fig. 12 est implémenté par la passerelle de collecte 128.

Dans une étape 1201, la passerelle de collecte 128 reçoit une trame ascendante en provenance d'un dispositif terminal. La trame ascendante précise l'adresse du dispositif terminal duquel ladite trame ascendante émane.

Dans une étape 1202, la passerelle de collecte 128 vérifie si le dispositif terminal est un dispositif terminal en itinérance pour lequel la délégation a été activée auprès de la passerelle de collecte 128. Si tel est le cas, une étape 1204 est effectuée ; sinon, une étape 1203 est effectuée.

Dans l'étape 1203, la passerelle de collecte 128 fait suivre la trame ascendante au réseau cœur, à savoir au premier serveur FNS 132, de sorte que ladite trame ascendante puisse parvenir au quatrième serveur AS 150 afin d'en traiter le contenu applicatif. La passerelle de collecte 128 sert ici simplement de relais et garde temporairement trace qu'un retour est attendu du réseau cœur vis-à-vis de ladite trame ascendante, au moins pour acquitter ladite trame ascendante et éventuellement pour fournir des données utiles complémentaires.

La passerelle de collecte 128 garde trace de la réception de ladite trame ascendante et de l'instant auquel ladite trame ascendante a été reçue, de manière à pouvoir ultérieurement déterminer à quel moment transmettre en réponse une trame descendante comportant, au moins, un acquittement de ladite trame ascendante. Lorsque la passerelle de collecte 128 reçoit ultérieurement du réseau cœur la trame descendante à faire suivre au dispositif terminal en question en réponse à ladite trame ascendante, le réseau cœur fournit une information temporelle représentative d'une durée et la passerelle de collecte 128 ajoute ladite durée à l'instant auquel ladite trame ascendante a été reçue, pour déterminer à quel moment transmettre ladite trame descendante.

En variante, la passerelle de collecte 128 programme (« schedule » en anglais) au moins une fenêtre de réception pour ledit dispositif terminal, dans laquelle la passerelle de collecte 128 est supposée relayer une trame descendante qui sera ultérieurement fournie par le réseau cœur. La passerelle de collecte 128 surveille alors de recevoir une trame descendante à faire suivre au dispositif terminal en question en réponse à ladite trame ascendante dans des délais appropriés pour respecter une dite fenêtre de réception ainsi programmée.

Dans l'étape 1204, la passerelle de collecte 128 doit acquitter, pour le compte du réseau cœur, la trame ascendante reçue à l'étape 1201. Cela signifie que le dispositif terminal concerné est en itinérance et que la passerelle de collecte 128 possède la délégation pour anticiper les acquittements à destination dudit dispositif terminal. Lorsque l'acquittement doit se faire dans une dite fenêtre de réception définie d'après un instant de transmission de ladite trame ascendante, la passerelle de collecte 128 s'assure que ledit dispositif terminal est à l'écoute du medium de communication. La passerelle de collecte 128 vérifie si le tampon associé audit dispositif terminal contient des données utiles fournies par le réseau cœur à l'attention dudit dispositif terminal. Si le tampon ne contient pas de telles données utiles, la passerelle de collecte 128 construit une trame descendante incluant l'acquittement susmentionné et transmet la trame descendante ainsi construite à destination dudit dispositif terminal au moment opportun. Sinon, la passerelle de collecte 128 construit une trame descendante incluant l'acquittement susmentionné et incluant aussi des données stockées dans le tampon. Ces données sont alors effacées du tampon, et la passerelle de collecte 128 transmet la trame descendante ainsi construite à destination dudit dispositif terminal au moment opportun, et l'étape 1205 est ensuite effectuée.

Dans le mode de réalisation particulier où les communications avec le dispositif terminal en question sont chiffrées, la passerelle de collecte 128 authentifie le dispositif terminal en décodant un code d'intégrité inclus dans la trame ascendante reçue à l'étape 1201 grâce aux clefs de sécurité associées audit dispositif terminal. Ce code d'intégrité est appelé MIC (« Message Integrity Code » en anglais) dans les spécifications LoRaWAN 1.1. Si l'authentification échoue, la passerelle de collecte 128 jette la trame ascendante et interrompt l'exécution de l'algorithme de la Fig. 12. De plus, lorsque la passerelle de collecte 128 doit chiffrer la trame descendante construite, la passerelle de collecte 128 utilise les clefs de sécurité associées audit dispositif terminal en itinérance pour chiffrer ladite trame descendante, avant de transmettre ladite trame descendante sous forme chiffrée. La trame descendante sous forme chiffrée inclut alors aussi un code d'intégrité authentifiant le réseau cœur, pour le compte duquel la passerelle de collecte 128 agit.

Dans l'étape 1205, la passerelle de collecte 128 fait suivre au réseau cœur la trame ascendante ou les données contenues de la trame ascendante, de sorte que ladite trame ascendante puisse parvenir au quatrième serveur AS 150 afin d'en traiter le contenu. La passerelle de collecte 128 peut aussi uniquement relayer les données hors délégation. On entend par données hors délégation les données qui ne concernent pas une fonctionnalité déléguée à la passerelle de collecte 128. La passerelle de collecte 128 peut ainsi par exemple ne pas propager le code d'intégrité contenu dans la trame ascendante reçue dudit dispositif terminal en itinérance. Ces données peuvent être chiffrées par la passerelle de collecte 128 grâce à une clef de sécurité connue aussi du premier serveur FNS 132, par exemple en utilisant un tunnel sécurisé.

On remarque, au vu de l'algorithme de la Fig. 12, que les données contenues dans une trame ascendante peuvent être relayées par plusieurs passerelles de collecte qui capteraient la trame ascendante en question. Il est alors à la charge du premier serveur FNS 132 d'effectuer toute déduplication appropriée de données.

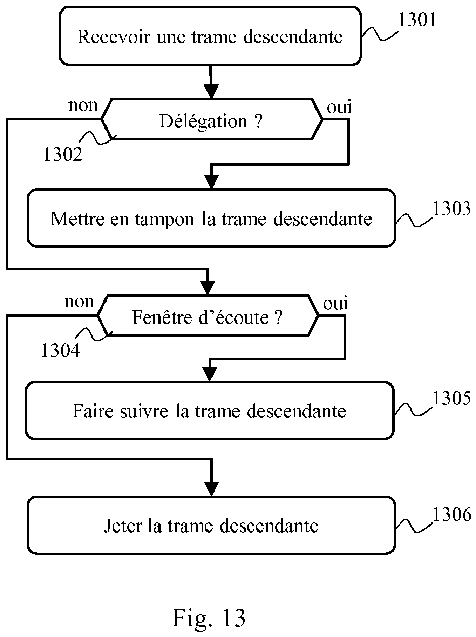

La **Fig. 13** illustre schématiquement un algorithme de traitement de trame descendante. L'algorithme de la Fig. 13 est implémenté par chaque passerelle de collecte du premier réseau. Considérons à titre illustratif que l'algorithme de la Fig. 13 est implémenté par la passerelle de collecte 128.

Dans une étape 1301, la passerelle de collecte 128 reçoit une trame descendante en provenance du réseau cœur. La trame descendante précise l'adresse du dispositif terminal auquel ladite trame descendante est destinée.

Dans une étape 1302, la passerelle de collecte 128 vérifie si la délégation a été activée vis-à-vis dudit dispositif terminal (auquel cas le dispositif terminal en question est en itinérance) ou pas. Si tel est le cas, une étape 1303 est effectuée ; sinon, une étape 1304 est effectuée.

Dans l'étape 1303, la passerelle de collecte 128 met les données contenues dans la trame descendante reçue à l'étape 1301 dans le tampon associé au dispositif terminal en itinérance auquel lesdites données sont destinées. On peut parler alors de « données utiles » (« useful data » en anglais) à l'attention dudit dispositif terminal en itinérance. La trame descendante reçue à l'étape 1301 a alors typiquement un format autre que les trames descendantes transmises par le premier serveur FNS 132 lorsque le mécanisme de délégation n'est pas activé, puisqu'au moins les acquittements ne sont pas gérés par le réseau cœur lorsque le mécanisme de délégation est activé. La passerelle de collecte 128 enverra ultérieurement les données utiles ainsi reçues du réseau cœur à l'attention du dispositif terminal en question, lorsqu'une fenêtre de réception le permettra, plus particulièrement en réponse à une prochaine transmission ascendante de la part dudit dispositif terminal en itinérance.

Dans l'étape 1204, la passerelle de collecte 128 doit assurer le relais de la trame descendante reçue à l'étape 1201. Etant donné que la délégation n'est pas activée, la passerelle de collecte 128 peut effectuer le relais vers le dispositif terminal en question uniquement s'il reste au moins une fenêtre de réception à venir d'après la trame ascendante qui a déclenché l'envoi de ladite trame descendante par le réseau cœur. En d'autres termes, la passerelle de collecte 128 vérifie si ladite passerelle de collecte 128 avait gardé une trace qu'un retour était attendu du réseau cœur vis-à-vis d'une trame ascendante précédemment reçue dudit dispositif terminal. Si tel est le cas, une étape 1205 est effectuée ; sinon, une étape 1206 est effectuée.

Dans l'étape 1205, la passerelle de collecte 128 fait suivre la trame descendante reçue à l'étape 1201 dans une dite fenêtre de réception définie d'après un instant de transmission de la trame ascendante qui a déclenché l'envoi de ladite trame descendante par le réseau cœur.

Dans l'étape 1206, la passerelle de collecte 128 est hors délai pour pouvoir relayer la trame descendante au dispositif terminal en question. La passerelle de collecte 128 jette donc la trame descendante. Il est alors de la responsabilité du réseau cœur de retransmettre ultérieurement les données utiles qui étaient contenues dans ladite trame descendante.

On voit aussi de ce qui précède que transférer une partie des fonctionnalités de contrôle de la couche MAC du serveur SNS 134 vers les passerelles de collecte du premier réseau constitue une amélioration significative en termes de latence dans des situations d'itinérance par transfert multi-réseaux dans un contexte où des protocoles de transport distincts sont utilisés pour former le réseau de communication de type LPWAN via lequel l'itinérance par transfert multi-réseaux est activée.

On voit aussi de ce qui précède que, bien qu'il ne soit pas nécessaire d'implémenter les formats de messages définis dans le protocole LoRaWAN pour bénéficier des avantages de l'invention, les dispositifs et procédés décrits sont largement compatibles avec les spécifications LoRaWAN 1.1 et en constituent une amélioration significative en termes de latence.

## Revendications

1. Procédé de gestion d'itinérance par transfert multi-réseaux dans un système de communication comportant un premier réseau de type LPWAN d'un premier opérateur et un second réseau de type LPWAN d'un second opérateur, le premier réseau comportant :
- des sous-réseaux (100, 101, 102) comportant chacun au moins un nœud de convergence (174, 175 ; 190, 191) et des nœuds de communication (170, 171, 172 ; 180, 181, 182) intégrant des passerelles de collecte (123, 124, 125 ; 127, 128, 129), les sous-réseaux (100, 101, 102) implémentant des protocoles de transport respectifs distincts,
- un premier serveur (131, 132, 133), pour chaque sous-réseau (100, 101, 102), en charge de gérer lesdites passerelles de collecte (123, 124, 125 ; 127, 128, 129) incluses dans ledit sous-réseau (100, 101, 102), chaque passerelle de collecte communiquant via un unique nœud de convergence associé avec un unique premier serveur associé, et
- un second serveur (134), couplé à tout premier serveur (131, 132, 133), en charge de contrôler la couche MAC pour des dispositifs terminaux (110, 111) communiquant via lesdites passerelles de collecte (123, 124, 125 ; 127, 128, 129) du premier réseau ;
le second réseau comportant :
- un troisième serveur (140) en charge d'interfacer un quatrième serveur (150) et un cinquième serveur (160) avec le second serveur (134) du premier réseau,
- le quatrième serveur (150), qui implémente une application avec laquelle au moins un dispositif terminal (110, 111) du second opérateur échange des données applicatives dans le cadre d'une souscription de services définie auprès du second opérateur, et
- le cinquième serveur (160), en charge d'authentifier tout dispositif terminal (110, 111) cherchant à rejoindre le système de communication pour bénéficier des services du quatrième serveur (150) ;
le procédé étant tel que le système de communication transporte des trames ascendantes incluant des données applicatives depuis ledit au moins un dispositif terminal (110, 111) du second opérateur jusqu'au quatrième serveur (150) par relais successifs d'un dit premier serveur (131, 132, 133), du second serveur (134) et du troisième serveur (140) lorsque ledit au moins un dispositif terminal (110, 111) du second opérateur est authentifié et en outre que lesdites trames ascendantes sont captées par au moins une passerelle de collecte (123, 124, 125 ; 127, 128, 129) du premier réseau,
le procédé étant en outre tel que chaque passerelle de collecte (123, 124, 125 ; 127, 128, 129) d'au moins un sous-réseau du premier réseau, qui a détecté un dispositif terminal (110, 111) du second opérateur demandant à rejoindre le système de communication pour bénéficier des services du quatrième serveur (150), communique avec le cinquième serveur (160) pour authentifier ledit dispositif terminal (110, 111) du second opérateur détecté, en court-circuitant le premier serveur (131, 132, 133) associé à ladite passerelle de collecte (123, 124, 125 ; 127, 128, 129), le second serveur (134) et le troisième serveur (140) grâce à une interface de communication court-circuitant aussi le nœud de convergence associé à ladite passerelle de collecte (123, 124, 125 ; 127, 128, 129).

2. Procédé selon la revendication 1, **caractérisé en ce que**, le premier réseau disposant d'une plage d'adresses pour tous les dispositifs terminaux (110, 111) accédant au système de communication via les passerelles de collecte (123, 124, 125 ; 127, 128, 129) du premier réseau, le cinquième serveur (160) gère un sous-ensemble prédéterminé d'adresses de la plage d'adresses du premier réseau et attribue une adresse parmi ledit sous-ensemble prédéterminé d'adresses à tout dispositif terminal (110, 111) du second opérateur qui est en itinérance par transfert multi-réseaux via le premier réseau et qui est authentifié par le cinquième serveur (160).

3. Procédé selon l'une quelconque des revendications 1 et 2, **caractérisé en ce que**, les communications avec chaque dispositif terminal (110, 111) authentifié du second opérateur étant chiffrées, le cinquième serveur (160) fournit les clefs de sécurité nécessaires auxdites communications chiffrées, et lorsqu'une passerelle de collecte (123, 124, 125 ; 127, 128, 129) du premier réseau reçoit (603) un message du cinquième serveur (160) indiquant qu'un dispositif terminal (110, 111) du second opérateur a été authentifié avec succès et incluant lesdites clefs de sécurité, ladite passerelle de collecte (123, 124, 125 ; 127, 128, 129) du premier réseau relaie (605) les clefs de sécurité au premier serveur (131, 132, 133) associé à ladite passerelle de collecte (123, 124, 125 ; 127, 128, 129).

4. Procédé selon la revendication 3, **caractérisé en ce que** le premier serveur (131, 132, 133) relaie les clefs de sécurité au second serveur (134).

5. Procédé selon l'une quelconque des revendications 1 à 4, **caractérisé en ce que**, pour demander à rejoindre le système de communication pour bénéficier des services du quatrième serveur (150), chaque dispositif terminal (110, 111) du second opérateur envoie (601) un message incluant un identifiant qui identifie de manière unique le cinquième serveur (160), et **en ce que** chaque passerelle de collecte (123, 124, 125 ; 127, 128, 129) du premier réseau captant ledit message détermine à quelle adresse contacter le cinquième serveur (160) grâce à une association préalablement stockée en mémoire entre ledit identifiant et l'adresse pour contacter le cinquième serveur (160).

6. Procédé selon la revendication 5, **caractérisé en ce que**, sur configuration de chaque passerelle de collecte (123, 124, 125 ; 127, 128, 129) du premier réseau avec l'identifiant qui identifie de manière unique le cinquième serveur (160), ladite passerelle de collecte (123, 124, 125 ; 127, 128, 129) du premier réseau demande à un sixième serveur, en charge d'effectuer des résolutions de noms de domaine, de fournir l'adresse pour contacter le cinquième serveur (160) grâce audit identifiant qui identifie de manière unique le cinquième serveur (160).

7. Procédé selon la revendication 6, **caractérisé en ce que**, sur configuration de chaque premier serveur (131, 132, 133) avec l'identifiant qui identifie de manière unique le cinquième serveur (160), chaque premier serveur (131, 132, 133) demande à un sixième serveur, en charge d'effectuer des résolutions de noms de domaine, de fournir l'adresse pour contacter le cinquième serveur (160) grâce audit identifiant qui identifie de manière unique le cinquième serveur (160), et chaque premier serveur (131, 132, 133) propage une association dudit identifiant et de ladite adresse à chaque passerelle de collecte (123, 124, 125 ; 127, 128, 129) qui est associée audit premier serveur (131, 132, 133).

8. Procédé selon l'une quelconque des revendications 1 à 7, **caractérisé en ce que**, lorsque le cinquième serveur (160) reçoit plusieurs copies d'un même message qui émane d'un dispositif terminal (110, 111) du second opérateur et qui demande à rejoindre le système de communication, le cinquième serveur (160) effectue une déduplication de données et répond à la première copie en séquence dudit message.

9. Procédé selon l'une quelconque des revendications 1 à 8, **caractérisé en ce que**, lorsqu'une passerelle de collecte (123, 124, 125 ; 127, 128, 129) du premier réseau reçoit un message du cinquième serveur (160) indiquant qu'un dispositif terminal (110, 111) du second opérateur a été authentifié avec succès, ladite passerelle de collecte (123, 124, 125 ; 127, 128, 129) active une délégation (1102) et notifie en conséquence le premier serveur (131, 132, 133) auquel ladite passerelle de collecte (123, 124, 125 ; 127, 128, 129) est associée, la délégation comportant les étapes suivantes :
- affecter un tampon audit dispositif terminal (110, 111) du second opérateur et y stocker des données utiles ultérieurement reçues de manière asynchrone via ledit premier serveur (131, 132, 133) à l'attention dudit dispositif terminal (110, 111) du second opérateur ; et
- acquitter toute trame ascendante ultérieurement reçue (1201) depuis ledit dispositif terminal (110, 111) du second opérateur en construisant et en transmettant (1204), pour le compte du second serveur (134), des trames descendantes incluant des acquittements respectifs desdites trames ascendantes et incluant, le cas échéant, des données utiles stockées dans le tampon affecté audit dispositif terminal (110, 111) du second opérateur ; et
- relayer (1205) la trame ascendante vers ledit premier serveur (131, 132, 133),
et sur réception (1301) d'une trame descendante à l'attention dudit dispositif terminal (110, 111) du second opérateur :
- placer (1303) les données utiles, fournies dans la trame descendante, dans le tampon affecté audit dispositif terminal (110, 111) du second opérateur.

10. Procédé selon la revendication 9, **caractérisé en ce que** chaque passerelle de collecte (123, 124, 125 ; 127, 128, 129) du premier réseau qui reçoit, en provenance du premier serveur (131, 132, 133) associé à ladite passerelle de collecte (123, 124, 125 ; 127, 128, 129), un ordre de désactivation de la délégation vis-à-vis d'un dispositif terminal (110, 111) du second opérateur effectue les étapes suivantes :
- si le tampon affecté audit dispositif terminal (110, 111) du second opérateur est vide, confirmer auprès dudit premier serveur (131, 132, 133) que ladite passerelle de collecte (123, 124, 125 ; 127, 128, 129) a désactivé la délégation vis-à-vis dudit dispositif terminal (110, 111) du second opérateur ;
- si le tampon affecté audit dispositif terminal (110, 111) du second opérateur n'est pas vide, maintenir la délégation jusqu'à ce que ledit tampon soit vidé par construction et transmission de dites trames descendantes par ladite passerelle de collecte (123, 124, 125 ; 127, 128, 129).

11. Procédé selon la revendication 9, **caractérisé en ce que** chaque passerelle de collecte (123, 124, 125 ; 127, 128, 129) du premier réseau ayant activé la délégation vis-à-vis d'un dispositif terminal (110, 111) du second opérateur incrémente une valeur d'un compteur de trames descendantes au fil des constructions desdites trames descendantes à l'attention dudit dispositif terminal (110, 111) du second opérateur et inclut dans lesdites trames descendantes la valeur incrémentée du compteur de trames descendantes,
et lorsque ladite passerelle de collecte (123, 124, 125 ; 127, 128, 129) désactive la délégation, ladite passerelle de collecte (123, 124, 125 ; 127, 128, 129) notifie (605) au premier serveur (131, 132, 133) auquel ladite passerelle de collecte (123, 124, 125 ; 127, 128, 129) est associée une valeur à jour du compteur de trames descendantes.

12. Procédé selon l'une quelconque des revendications 1 à 11, **caractérisé en ce qu'**un sous-réseau du premier réseau est un réseau de communication par courants porteurs où lesdits nœuds de communication sont des compteurs électriques intelligents (170, 171, 172) et où chaque dispositif de convergence est un concentrateur de données (174, 175), et un autre sous-réseau du premier réseau est un réseau de fourniture d'accès à l'Internet où lesdits nœuds de communication sont des passerelles résidentielles (180, 181, 182) et où chaque dispositif de convergence est un multiplexeur de type DSLAM (190, 191).

13. Système de communication comportant un premier réseau de type LPWAN d'un premier opérateur et un second réseau de type LPWAN d'un second opérateur, le premier réseau comportant :
- des sous-réseaux (100, 101, 102) comportant chacun au moins un nœud de convergence (174, 175 ; 190, 191) et des nœuds de communication (170, 171, 172 ; 180, 181, 182) intégrant des passerelles de collecte (123, 124, 125 ; 127, 128, 129), les sous-réseaux (100, 101, 102) implémentant des protocoles de transport respectifs distincts,
- un premier serveur (131, 132, 133), pour chaque sous-réseau (100, 101, 102), en charge de gérer lesdites passerelles de collecte (123, 124, 125 ; 127, 128, 129) incluses dans ledit sous-réseau (100, 101, 102), chaque passerelle de collecte communiquant via un unique nœud de convergence associé avec un unique premier serveur associé, et
- un second serveur (134), couplé à tout premier serveur (131, 132, 133), en charge de contrôler la couche MAC pour des dispositifs terminaux (110, 111) communiquant via lesdites passerelles de collecte (123, 124, 125 ; 127, 128, 129) du premier réseau ;
le second réseau comportant :
- un troisième serveur (140) en charge d'interfacer un quatrième serveur (150) et un cinquième serveur (160) avec le second serveur (134) du premier réseau,
- le quatrième serveur (150), qui implémente une application avec laquelle au moins un dispositif terminal (110, 111) du second opérateur échange des données applicatives dans le cadre d'une souscription de services définie auprès du second opérateur, et
- le cinquième serveur (160), en charge d'authentifier tout dispositif terminal (110, 111) cherchant à rejoindre le système de communication pour bénéficier des services du quatrième serveur (150) ;
le système de communication étant agencé, dans le cadre d'une gestion d'itinérance par transfert multi-réseaux entre le premier réseau et le second réseau, pour transporter des trames ascendantes incluant des données applicatives depuis ledit au moins un dispositif terminal (110, 111) du second opérateur jusqu'au quatrième serveur (150) par relais successifs d'un dit premier serveur (131, 132, 133), du second serveur (134) et du troisième serveur (140) lorsque ledit au moins un dispositif terminal (110, 111) du second opérateur est authentifié et en outre que lesdites trames ascendantes sont captées par au moins une passerelle de collecte (123, 124, 125 ; 127, 128, 129) du premier réseau,
le système de communication étant en outre tel que chaque passerelle de collecte (123, 124, 125 ; 127, 128, 129) d'au moins un sous-réseau du premier réseau, qui a détecté un dispositif terminal (110, 111) du second opérateur demandant à rejoindre le système de communication pour bénéficier des services du quatrième serveur (150), communique avec le cinquième serveur (160) pour authentifier ledit dispositif terminal (110, 111) du second opérateur détecté, en court-circuitant le premier serveur (131, 132, 133) associé à ladite passerelle de collecte (123, 124, 125 ; 127, 128, 129), le second serveur (134) et le troisième serveur (140) grâce à une interface de communication court-circuitant aussi le nœud de convergence (174, 175 ; 190, 191) associé à ladite passerelle de collecte (123, 124, 125 ; 127, 128, 129).

14. Système de communication selon la revendication 13, **caractérisé en ce qu'**un sous-réseau du premier réseau est un réseau de communication par courants porteurs où lesdits nœuds de communication sont des compteurs électriques intelligents (170, 171, 172) et où chaque dispositif de convergence est un concentrateur de données (174, 175), et un autre sous-réseau du premier réseau est un réseau de fourniture d'accès à l'Internet où lesdits nœuds de communication sont des passerelles résidentielles (180, 181, 182) et où chaque dispositif de convergence est un multiplexeur de type DSLAM (190, 191).

## Patentansprüche

1. Roaming-Verwaltungsverfahren durch Multinetzwerk-Transfer in einem Kommunikationssystem, umfassend ein erstes Netzwerk vom Typ LPWAN eines ersten Betreibers und ein zweites Netzwerk vom Typ LPWAN eines zweiten Betreibers, wobei das erste Netzwerk umfasst:
- Teilnetzwerke (100, 101, 102), die jeweils mindestens einen Konvergenzknoten (174, 175; 190, 191) und Kommunikationsknoten (170, 171, 172; 180, 181, 182) mit Sammel-Gateways (123, 124, 125; 127, 128, 129) umfassen, wobei die Teilnetzwerke (100, 101, 102) jeweilige gesonderte Übertragungsprotokolle implementieren,
- einen ersten Server (131, 132, 133) für jedes Teilnetzwerk (100, 101, 102), der zuständig ist für die Verwaltung der Sammel-Gateways (123, 124, 125; 127, 128, 129), die im Teilnetzwerk (100, 101, 102) enthalten sind, wobei jedes Sammel-Gateway über einen einzigen Konvergenzknoten kommuniziert, der mit einem einzigen zugeordneten ersten Server verknüpft ist, und
- einen zweiten Server (134), der mit jedem ersten Server (131, 132, 133) verbunden und zuständig ist für die Steuerung der MAC-Schicht für die Endgeräte (110, 111), die über die Sammel-Gateways (123, 124, 125; 127, 128, 129) des ersten Netzwerks kommunizieren;
wobei das zweite Netzwerk umfasst:
- einen dritten Server (140), der dafür zuständig ist, einen vierten Server (150) und einen fünften Server (160) mit dem zweiten Server (134) des ersten Netzwerks zu verbinden,
- den vierten Server (150), der eine Anwendung implementiert, mit der mindestens ein Endgerät (110, 111) des zweiten Betreibers Anwendungsdaten im Rahmen eines Diensteabonnements austauscht, das bei dem zweiten Betreiber definiert ist; und
- den fünften Server (160), der dafür zuständig ist, jedes Endgerät (110, 111) zu authentifizieren, das sich mit dem Kommunikationssystem verbinden möchte, um die Dienste des vierten Servers (150) in Anspruch zu nehmen;
wobei das Verfahren derart ist, dass das Kommunikationssystem Netzaufwärtsrahmen, die Anwendungsdaten enthalten, von dem mindestens einen Endgerät (110, 111) des zweiten Betreibers über aufeinanderfolgende Weiterleitung durch einen ersten Server (131, 132, 133), den zweiten Server (134) und den dritten Server (140) bis zum vierten Server (150) transportiert, wenn das mindestens eine Endgerät (110, 111) des zweiten Betreibers authentifiziert ist, und dass außerdem die Netzaufwärtsrahmen von mindestens einem Sammel-Gateway (123, 124, 125; 127, 128, 129) des ersten Netzwerks erfasst werden,
wobei das Verfahren außerdem derart ist, dass jedes Sammel-Gateway (123, 124, 125; 127, 128, 129) von mindestens einem Teilnetzwerk des ersten Netzwerks, das ein Endgerät (110, 111) des zweiten Betreibers erkannt hat, das eine Verbindung mit dem Kommunikationssystem verlangt, um die Dienste des vierten Servers (150) in Anspruch zu nehmen, mit dem fünften Server (160) kommuniziert, um das erkannte Endgerät (110, 111) des zweiten Betreibers zu authentifizieren, und dabei den ersten Server (131, 132, 133) umgeht, der mit dem Sammel-Gateway (123, 124, 125; 127, 128, 129) verknüpft ist, wobei der zweite Server (134) und der dritte Server (140) mithilfe einer Kommunikationsschnittstelle auch den Konvergenzknoten umgehen, der mit dem Sammel-Gateway (123, 124, 125; 127, 128, 129) verknüpft ist.

2. Verfahren nach Anspruch 1, **dadurch gekennzeichnet, dass** das erste Netzwerk, das über einen Adressbereich für alle Endgeräte (110, 111) verfügt, die über die Sammel-Gateways (123, 124, 125; 127, 128, 129) des ersten Netzwerks zum Kommunikationssystem Zugang haben, der fünfte Server (160) eine vorbestimmte Teilmenge von Adressen des Adressbereichs des ersten Netzwerks verwaltet und eine Adresse aus der vorbestimmten Teilmenge von Adressen an jedes Endgerät (110, 111) des zweiten Betreibers vergibt, das sich über das erste Netzwerk im Roaming durch Multinetzwerk-Transfer befindet und vom fünften Server (160) authentifiziert ist.

3. Verfahren nach einem der Ansprüche 1 und 2, **dadurch gekennzeichnet, dass** die Kommunikation mit jedem authentifizierten Endgerät (110, 111) des zweiten Betreibers verschlüsselt ist, der fünfte Server (160) die notwendigen Sicherheitsschlüssel für die verschlüsselte Kommunikation bereitstellt, und wenn ein Sammel-Gateway (123, 124, 125; 127, 128, 129) des ersten Netzwerks eine Meldung vom fünften Server (160) empfängt (603), die angibt, dass ein Endgerät (110, 111) des zweiten Betreibers erfolgreich authentifiziert wurde, und die Sicherheitsschlüssel enthält, das Sammel-Gateway (123, 124, 125 ; 127, 128, 129) des ersten Netzwerks die Sicherheitsschlüssel an den ersten Server (131, 132, 133) weiterleitet (605), der mit dem Sammel-Gateway (123, 124, 125; 127, 128, 129) verknüpft ist.

4. Verfahren nach Anspruch 3, **dadurch gekennzeichnet, dass** der erste Server (131, 132, 133) die Sicherheitsschlüssel an den zweiten Server (134) weiterleitet.

5. Verfahren nach einem der Ansprüche 1 bis 4, **dadurch gekennzeichnet, dass**, um eine Verbindung mit dem Kommunikationssystem zu verlangen, um die Dienste des vierten Servers (150) in Anspruch zu nehmen, jedes Endgerät (110, 111) des zweiten Betreibers eine Meldung sendet (601), die eine Kennung enthält, die den fünften Server (160) eindeutig kennzeichnet, und dadurch, dass jedes Sammel-Gateway (123, 124, 125; 127, 128, 129) des ersten Netzwerks, das die Meldung erfasst, mithilfe einer zuvor im Speicher gespeicherten Verknüpfung zwischen der Kennung und der Adresse zum Kontaktieren des fünften Servers (160) feststellt, unter welcher Adresse der fünfte Server (160) zu kontaktieren ist.

6. Verfahren nach Anspruch 5, **dadurch gekennzeichnet, dass** nach Konfiguration jedes Sammel-Gateways (123, 124, 125; 127, 128, 129) des ersten Netzwerks mit der Kennung, die den fünften Server (160) eindeutig kennzeichnet, das Sammel-Gateway (123, 124, 125; 127, 128, 129) des ersten Netzwerks von einem sechsten Server, der für Auflösungen von Domainnamen zuständig ist, verlangt, mithilfe der Kennung, die den fünften Server (160) eindeutig kennzeichnet, die Adresse zur Kontaktierung des fünften Servers (160) bereitzustellen.

7. Verfahren nach Anspruch 6, **dadurch gekennzeichnet, dass** nach Konfiguration jedes ersten Servers (131, 132, 133) mit der Kennung, die den fünften Server (160) eindeutig kennzeichnet, jeder erste Server (131, 132, 133) von einem sechsten Server, der für Auflösungen von Domainnamen zuständig ist, verlangt, mithilfe der Kennung, die den fünften Server (160) eindeutig kennzeichnet, die Adresse zur Kontaktierung des fünften Servers (160) bereitzustellen, und jeder erste Server (131, 132, 133) eine Verknüpfung der Kennung und der Adresse an jedes Sammel-Gateway (123, 124, 125; 127, 128, 129) weitergibt, das mit dem ersten Server (131, 132, 133) verknüpft ist.

8. Verfahren nach einem der Ansprüche 1 bis 7, **dadurch gekennzeichnet, dass**, wenn der fünfte Server (160) mehrere Kopien einer selben Meldung erhält, die von einem Endgerät (110, 111) des zweiten Betreibers ausgeht und eine Verbindung mit dem Kommunikationssystem verlangt, der fünfte Server (160) eine Datendeduplikation durchführt und auf die erste sequenzielle Kopie der Meldung antwortet.

9. Verfahren nach einem der Ansprüche 1 bis 8, **dadurch gekennzeichnet, dass**, wenn ein Sammel-Gateway (123, 124, 125; 127, 128, 129) des ersten Netzwerks eine Meldung vom fünften Server (160) erhält, die angibt, dass ein Endgerät (110, 111) des zweiten Betreibers erfolgreich authentifiziert wurde, das Sammel-Gateway (123, 124, 125; 127, 128, 129) eine Delegierung (1102) aktiviert und als Folge den ersten Server (131, 132, 133) benachrichtigt, mit dem das Sammel-Gateway (123, 124, 125; 127, 128, 129) verknüpft ist, wobei die Delegierung die folgenden Schritte umfasst:
- Zuteilen eines Puffers an das Endgerät (110, 111) des zweiten Betreibers und dortiges Speichern von Nutzdaten, die später asynchron über den ersten Server (131, 132, 133) empfangen werden, für das Endgerät (110, 111) des zweiten Betreibers; und
- Bestätigen eines Netzaufwärtsrahmens (1201), der später vom Endgerät (110, 111) des zweiten Betreibers empfangen wird, indem im Auftrag des zweiten Servers (134) Netzabwärtsrahmen mit jeweiligen Bestätigungen der Netzaufwärtsrahmen aufgebaut und übertragen (1204) werden und gegebenenfalls Nutzdaten einschließen, die in dem mit dem Endgerät (110, 111) des zweiten Betreibers verknüpften Puffer gespeichert sind; und
- Weiterleiten (1205) des Netzaufwärtsrahmens zum ersten Server (131, 132, 133),
und bei Empfang (1301) eines Netzabwärtsrahmens für das Endgerät (110, 111) des zweiten Betreibers:
- Ablegen (1303) der Nutzdaten, die im Netzabwärtsrahmen bereitgestellt werden, im Puffer, der dem Endgerät (110, 111) des zweiten Betreibers zugeteilt ist.

10. Verfahren nach Anspruch 9, **dadurch gekennzeichnet, dass** jedes Sammel-Gateway (123, 124, 125; 127, 128, 129) des ersten Netzwerks, das vom ersten Server (131, 132, 133), der mit dem Sammel-Gateway (123, 124, 125; 127, 128, 129) verknüpft ist, einen Befehl zur Deaktivierung der Delegierung in Bezug auf ein Endgerät (110, 111) des zweiten Betreibers empfängt, die folgenden Schritte durchführt:
- wenn der Puffer, der dem Endgerät (110, 111) des zweiten Betreibers zugeteilt ist, leer ist, Bestätigen gegenüber dem ersten Server (131, 132, 133), dass das Sammel-Gateway (123, 124, 125; 127, 128, 129) die Delegierung in Bezug auf das Endgerät (110, 111) des zweiten Betreibers deaktiviert hat;
- wenn der Puffer, der dem Endgerät (110, 111) des zweiten Betreibers zugeteilt ist, nicht leer ist, Aufrechterhalten der Delegierung, bis der Puffer leer ist, durch Aufbau und Übermittlung von sogenannten Netzabwärtsrahmen durch das Sammel-Gateway (123, 124, 125; 127, 128, 129).

11. Verfahren nach Anspruch 9, **dadurch gekennzeichnet, dass** jedes Sammel-Gateway (123, 124, 125; 127, 128, 129) des ersten Netzwerks, das die Delegierung in Bezug auf ein Endgerät (110, 111) des zweiten Betreibers aktiviert hat, einen Wert eines Netzabwärtsrahmenzählers im Verlauf des Aufbaus der Netzabwärtsrahmen für das Endgerät (110, 111) des zweiten Betreibers inkrementiert und den inkrementierten Wert des Netzabwärtsrahmenzählers in die Netzabwärtsrahmen aufnimmt,
und wenn das Sammel-Gateway (123, 124, 125; 127, 128, 129) die Delegierung deaktiviert, das Sammel-Gateway (123, 124, 125; 127, 128, 129) dem ersten Server (131, 132, 133), mit dem das Sammel-Gateway (123, 124, 125; 127, 128, 129) verknüpft ist, einen aktuellen Wert des Netzabwärtsrahmenzählers meldet (605).

12. Verfahren nach einem der Ansprüche 1 bis 11, **dadurch gekennzeichnet, dass** ein Teilnetzwerk des ersten Netzwerks ein Kommunikationsnetzwerk durch Trägerströme ist, bei dem die Kommunikationsknoten intelligente elektrische Zähler (170, 171, 172) sind und bei dem jede Konvergenzvorrichtung ein Datenkonzentrator (174, 175) ist, und ein anderes Teilnetzwerk des ersten Netzwerks ein Netzwerk der Bereitstellung eines Internet-Zugangs ist, bei dem die Kommunikationsknoten Heimnetz-Gateways (180, 181, 182) sind und bei dem jede Konvergenzvorrichtung ein Multiplexer vom Typ DSLAM (190, 191) ist.

13. Kommunikationssystem, umfassend ein erstes Netzwerk vom Typ LPWAN eines ersten Betreibers und ein zweites Netzwerk vom Typ LPWAN eines zweiten Betreibers, wobei das erste Netzwerk umfasst:
- Teilnetzwerke (100, 101, 102), die jeweils mindestens einen Konvergenzknoten (174, 175; 190, 191) und Kommunikationsknoten (170, 171, 172; 180, 181, 182) mit Sammel-Gateways (123, 124, 125; 127, 128, 129) umfassen, wobei die Teilnetzwerke (100, 101, 102) jeweilige gesonderte Übertragungsprotokolle implementieren,
- einen ersten Server (131, 132, 133) für jedes Teilnetzwerk (100, 101, 102), der zuständig ist für die Verwaltung der Sammel-Gateways (123, 124, 125; 127, 128, 129), die im Teilnetzwerk (100, 101, 102) enthalten sind, wobei jedes Sammel-Gateway über einen einzigen Konvergenzknoten kommuniziert, der mit einem einzigen verknüpften ersten Server verknüpft ist, und
- einen zweiten Server (134), der mit jedem ersten Server (131, 132, 133) verbunden und zuständig ist für die Steuerung der MAC-Schicht für die Endgeräte (110, 111), die über die Sammel-Gateways (123, 124, 125; 127, 128, 129) des ersten Netzwerks kommunizieren;
wobei das zweite Netzwerk umfasst:
- einen dritten Server (140), der dafür zuständig ist, einen vierten Server (150) und einen fünften Server (160) mit dem zweiten Server (134) des ersten Netzwerks zu verbinden,
- den vierten Server (150), der eine Anwendung implementiert, mit der mindestens ein Endgerät (110, 111) des zweiten Betreibers Anwendungsdaten im Rahmen eines Diensteabonnements austauscht, das bei dem zweiten Betreiber definiert ist; und
- den fünften Server (160), der dafür zuständig ist, jedes Endgerät (110, 111) zu authentifizieren, das sich mit dem Kommunikationssystem verbinden möchte, um die Dienste des vierten Servers (150) in Anspruch zu nehmen;
wobei das Kommunikationssystem dafür eingerichtet ist, im Rahmen eines Roaming-Verwaltungsverfahrens durch Multinetzwerk-Transfer zwischen dem ersten Netzwerk und dem zweiten Netzwerk Netzaufwärtsrahmen, die Anwendungsdaten enthalten, von dem mindestens einen Endgerät (110, 111) des zweiten Betreibers über aufeinanderfolgende Weiterleitung durch einen ersten Server (131, 132, 133), den zweiten Server (134) und den dritten Server (140) bis zum vierten Server (150) zu transportieren, wenn das mindestens eine Endgerät (110, 111) des zweiten Betreibers authentifiziert ist, und dafür, außerdem die Netzaufwärtsrahmen von mindestens einem Sammel-Gateway (123, 124, 125; 127, 128, 129) des ersten Netzwerks zu erfassen,
wobei das Kommunikationssystem außerdem derart ist, dass jedes Sammel-Gateway (123, 124, 125; 127, 128, 129) von mindestens einem Teilnetzwerk des ersten Netzwerks, das ein Endgerät (110, 111) des zweiten Betreibers erkannt hat, das eine Verbindung mit dem Kommunikationssystem verlangt, um die Dienste des vierten Servers (150) in Anspruch zu nehmen, mit dem fünften Server (160) kommuniziert, um das erkannte Endgerät (110, 111) des zweiten Betreibers zu authentifizieren, und dabei den ersten Server (131, 132, 133) umgeht, der mit dem Sammel-Gateway (123, 124, 125; 127, 128, 129) verknüpft ist, wobei der zweite Server (134) und der dritte Server (140) mithilfe einer Kommunikationsschnittstelle auch den Konvergenzknoten (174, 175; 190, 191) umgehen, der mit dem Sammel-Gateway (123, 124, 125; 127, 128, 129) verknüpft ist.

14. Kommunikationssystem nach Anspruch 13, **dadurch gekennzeichnet, dass** ein Teilnetzwerk des ersten Netzwerks ein Kommunikationsnetzwerk durch Trägerströme ist, bei dem die Kommunikationsknoten intelligente elektrische Zähler (170, 171, 172) sind und bei dem jede Konvergenzvorrichtung ein Datenkonzentrator (174, 175) ist, und ein anderes Teilnetzwerk des ersten Netzwerks ein Netzwerk der Bereitstellung eines Internet-Zugangs ist, bei dem die Kommunikationsknoten Heimnetz-Gateways (180, 181, 182) sind und bei dem jede Konvergenzvorrichtung ein Multiplexer vom Typ DSLAM (190, 191) ist.

## Claims

1. Method for the management of handover roaming in a communication system comprising a first LPWAN network of a first operator and a second LPWAN network of a second operator, the first network comprising:
- subnetworks (100, 101, 102) each comprising at least one convergence node (174, 175; 190, 191) and communication nodes (170, 171, 172; 180, 181, 182) integrating gathering gateways (123, 124, 125; 127, 128, 129), the subnetworks (100, 101, 102) implementing separate respective transport protocols,
- a first server (131, 132, 133), for each subnetwork (100, 101, 102), responsible for managing said gathering gateways (123, 124, 125; 127, 128, 129) included in said subnetwork (100, 101, 102), each gathering gateway communicating via a single convergence node associated with an associated single first server, and
- a second server (134), coupled to any first server (131, 132, 133), responsible for controlling the MAC layer for end devices (110, 111) communicating via said gathering gateways (123, 124, 125; 127, 128, 129) of the first network;
the second network comprising:
- a third server (140) responsible for interfacing a fourth server (150) and a fifth server (160) with the second server (134) of the first network,
- the fourth server (150), which implements an application with which at least one end device (110, 111) of the second operator exchanges application data in the context of a subscription to services defined with the second operator, and
- the fifth server (160), responsible for authenticating any end device (110, 111) seeking to join the communication system in order to benefit from the services of the fourth server (150);
the method being such that the communication system transports uplink frames including application data from said at least one end device (110, 111) of the second operator to the fourth server (150) by successive relayings of a said first server (131, 132, 133), of the second server (134) and of the third server (140) when said at least one end device (110, 111) of the second operator is authenticated and furthermore such that said uplink frames are captured by at least one gathering gateway (123, 124, 125; 127, 128, 129) of the first network,
the method being furthermore such that each gathering gateway (123, 124, 125; 127, 128, 129) of at least one subnetwork of the first network, which has detected an end device (110, 111) of the second operator requesting to join the communication system in order to benefit from the services of the fourth server (150) communicates with the fifth server (160) in order to authenticate said end device (110, 111) of the second operator detected, shortcutting the first server (131, 132, 133) associated with said gathering gateway (123, 124, 125; 127, 128, 129), the second server (134) and the third server (140) by means of a communication interface also shortcutting the convergence node associated with said gathering gateway (123, 124, 125; 127, 128, 129).

2. Method according to claim 1, **characterised in that**, the first network having a range of addresses for all the end devices (110, 111) accessing the communication system via the gathering gateways (123, 124, 125; 127, 128, 129) of the first network, the fifth server (160) manages a predetermined subset of addresses in the range of addresses of the first network and attributes one address among said predetermined subset of addresses to any end device (110, 111) of the second operator that is in handover roaming via the first network and is authenticated by the fifth server (160).

3. Method according to either claim 1 or claim 2, **characterised in that**, the communications with each authenticated end device (110, 111) of the second operator being encrypted, the fifth server (160) provides the security keys necessary for said encrypted communications, and, when a gathering gateway (123, 124, 125; 127, 128, 129) of the first network receives (603) a message from the fifth server (160) indicating that an end device (110, 111) of the second operator has been authenticated successfully and including said security keys, said gathering gateway (123, 124, 125; 127, 128, 129) of the first network relays (605) the security keys to the first server (131, 132, 133) associated with said gathering gateway (123, 124, 125; 127, 128, 129).

4. Method according to claim 3, **characterised in that** the first server (131, 132, 133) relays the security keys to the second server (134).

5. Method according to any of claims 1 to 4, **characterised in that**, in order to request to join the communication system in order to benefit from the services of the fourth server (150), each end device (110, 111) of the second operator sends (601) a message including an identifier that uniquely identifies the fifth server (160), and **in that** each gathering gateway (123, 124, 125; 127, 128, 129) of the first network capturing said message determines at what address to contact the fifth server (160) by means of an association previously stored in memory between said identifier and the address for contacting the fifth server (160).

6. Method according to claim 5, **characterised in that**, on configuration of each gathering gateway (123, 124, 125; 127, 128, 129) of the first network with the identifier that uniquely identifies the fifth server (160), said gathering gateway (123, 124, 125; 127, 128, 129) of the first network requests a sixth server, responsible for making resolutions of domain names, to supply the address for contacting the fifth server (160) by means of said identifier that uniquely identifies the fifth server (160).

7. Method according to claim 6, **characterised in that**, on configuration of each first server (131, 132, 133) with the identifier that uniquely identifies the fifth server (160), each first server (131, 132, 133) requests a sixth server, responsible for making resolutions of domain names, to supply the address for contacting the fifth server (160) by means of said identifier that uniquely identifies the fifth server (160), and each first server (131, 132, 133) propagates an association of said identifier and said address to each gathering gateway (123, 124, 125; 127, 128, 129) that is associated with said first server (131, 132, 133).

8. Method according to any of claims 1 to 7, **characterised in that**, when the fifth server (160) receives a plurality of copies of the same message that emanates from an end device (110, 111) of the second operator and which requests to join the communication system, the fifth server (160) effects a deduplication of data and responds to the first copy in sequence of said message.

9. Method according to any of claims 1 to 8, **characterised in that**, when a gathering gateway (123, 124, 125; 127, 128, 129) of the first network receives a message from the fifth server (160) indicating that an end device (110, 111) of the second operator has been successfully authenticated, said gathering gateway (123, 124, 125; 127, 128, 129) activates a delegation (1102) and notifies accordingly the first server (131, 132, 133) with which said gathering gateway (123, 124, 125; 127, 128, 129) is associated, the delegation comprising the following steps:
- allocating a buffer to said end device (110, 111) of the second operator and storing therein useful data subsequently received asynchronously via said first server (131, 132, 133) for the attention of said end device (110, 111) of the second operator; and
- acknowledging any uplink frame subsequently received (1201) from said end device (110, 111) of the second operator while constructing and transmitting (1204), on behalf of the second server (134), downlink frames including respective acknowledgements of said uplink frames and including, where applicable, useful data stored in the buffer allocated to said end device (110, 111) of the second operator; and
- relaying (1205) the uplink frame to said first server (131, 132, 133),
and, on reception (1301) of a downlink frame for the attention of said end device (110, 111) of the second operator:
- placing (1303) the useful data, supplied in the downlink frame, in the buffer allocated to said end device (110, 111) of the second operator.

10. Method according to claim 9, **characterised in that** each gathering gateway (123, 124, 125; 127, 128, 129) of the first network that receives, coming from the first server (131, 132, 133) associated with said gathering gateway (123, 124, 125; 127, 128, 129), an instruction to deactivate the delegation vis-à-vis an end device (110, 111) of the second operator, performs the following steps:
- if the buffer allocated to said end device (110, 111) of the second operator is empty, confirming with said first server (131, 132, 133) that said gathering gateway (123, 124, 125; 127, 128, 129) has deactivated the delegation vis-à-vis said end device (110, 111) of the second operator;
- if the buffer allocated to said end device (110, 111) of the second operator is not empty, maintaining the delegation until the buffer is emptied by construction and transmission of said downlink frames by said gathering gateway (123, 124, 125; 127, 128, 129).

11. Method according to claim 9, **characterised in that** each gathering gateway (123, 124, 125; 127, 128, 129) of the first network that has activated the delegation vis-à-vis an end device (110, 111) of the second operator increments a value of a counter of downlink frames as said downlink frames are constructed for the attention of said end device (110, 111) of the second operator and includes in said downlink frames the incremented value of the downlink frame counter,
and, when said gathering gateway (123, 124, 125; 127, 128, 129) deactivates the delegation, said gathering gateway (123, 124, 125; 127, 128, 129) notifies (605) to the first server (131, 132, 133) with which said gathering gateway (123, 124, 125; 127, 128, 129) is associated an up-to-date value of the downlink frame counter.

12. Method according to any of claims 1 to 11, **characterised in that** a subnetwork of the first network is a powerline communication network wherein said communication nodes are smart electricity meters (170, 171, 172) and wherein each convergence device is a data concentrator (174, 175), and another subnetwork of the first network is a network providing access to the internet wherein said communication nodes are residential gateways (180, 181, 182) and wherein each convergence device is a multiplexer of the DSLAM type (190, 191).

13. Communication system comprising a first LPWAN network of a first operator and a second LPWAN network of a second operator, the first network comprising:
- subnetworks (100, 101, 102) each comprising at least one convergence node (174, 175; 190, 191) and communication nodes (170, 171, 172; 180, 181, 182) integrating gathering gateways (123, 124, 125; 127, 128, 129), the subnetworks (100, 101, 102) implementing separate respective transport protocols,
- a first server (131, 132, 133), for each subnetwork (100, 101, 102), responsible for managing said gathering gateways (123, 124, 125; 127, 128, 129), included in said subnetwork (100, 101, 102), each gathering gateway communicating via a single convergence node associated with an associated single first server, and
- a second server (134), coupled to any first server (131, 132, 133), responsible for controlling the MAC layer for end devices (110, 111) communicating via said gathering gateways (123, 124, 125; 127, 128, 129) of the first network;
the second network comprising:
- a third server (140) responsible for interfacing a fourth server (150) and a fifth server (160) with the second server (134) of the first network,
- the fourth server (150), which implements an application with which at least one end device (110, 111) of the second operator exchanges application data in the context of a subscription to services defined with the second operator, and
- the fifth server (160), responsible for authenticating any end device (110, 111) seeking to join the communication system in order to benefit from the services of the fourth server (150);
the communication system being arranged, in the context of a management of handover roaming between the first network and the second network, for transporting uplink frames including application data from said at least one end device (110, 111) of the second operator to the fourth server (150) by successive relayings of a said first server (131, 132, 133), of the second server (134) and of the third server (140) when said at least one end device (110, 111) of the second operator is authenticated and furthermore when said uplink frames are captured by at least one gathering gateway (123, 124, 125; 127, 128, 129) of the first network,
the communication system furthermore being such that each gathering gateway (123, 124, 125; 127, 128, 129) of at least one subnetwork of the first network, which has detected an end device (110, 111) of the second operator requesting to join the communication system in order to benefit from the services of the fourth server (150), communicates with the fifth server (160) in order to authenticate said end device (110, 111) of the second operator detected, shortcutting the first server (131, 132, 133) associated with said gathering gateway (123, 124, 125; 127, 128, 129), the second server (134) and the third server (140) by means of a communication interface also shortcutting the convergence node (174, 175; 190, 191) associated with said gathering gateway (123, 124, 125; 127, 128, 129).

14. Communication system according to claim 13, **characterised in that** a subnetwork of the first network is a powerline communication network wherein said communication nodes are smart electricity meters (170, 171, 172) and wherein each convergence device is a data concentrator (174, 175), and another subnetwork of the first network is a network providing access to the internet wherein said communication nodes are residential gateways (180, 181, 182) and wherein each convergence device is a DSLAM multiplexer (190, 191).
